(19) Europäisches Patentamt
European Patent Office
Office européen des brevets

(11) EP 3 110 871 B1

(12) **EUROPÄISCHE PATENTSCHRIFT**

(45) Veröffentlichungstag und Bekanntmachung des Hinweises auf die Patenterteilung:
**15.11.2017 Patentblatt 2017/46**

(21) Anmeldenummer: **15708138.1**

(22) Anmeldetag: **23.02.2015**

(51) Int Cl.:
***C08G 65/26*** (2006.01) ***C08G 65/34*** (2006.01)
***C08G 64/34*** (2006.01) ***C08G 64/18*** (2006.01)

(86) Internationale Anmeldenummer:
**PCT/EP2015/053692**

(87) Internationale Veröffentlichungsnummer:
**WO 2015/128277 (03.09.2015 Gazette 2015/35)**

# (54) VERFAHREN ZUR HERSTELLUNG VON POLYETHERESTERCARBONATPOLYOLEN

METHOD FOR MANUFACTURING POLYETHER ESTER CARBONATE POLYOLS

PROCÉDÉ DE FABRICATION DE POLYOLS DE POLYETHERESTER CARBONATE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **26.02.2014 EP 14156831**
**12.12.2014 EP 14197726**

(43) Veröffentlichungstag der Anmeldung:
**04.01.2017 Patentblatt 2017/01**

(73) Patentinhaber: **Covestro Deutschland AG**
**51373 Leverkusen (DE)**

(72) Erfinder:
- **Dr. MÜLLER, Thomas Ernst**
  **52074 Aachen (DE)**
- **Dr. GÜRTLER, Christoph**
  **50735 Köln (DE)**
- **Dr. SUBHANI, Muhammad Afzal**
  **52066 Aachen (DE)**
- **Prof. Dr. LEITNER, Walter**
  **52074 Aachen (DE)**

(74) Vertreter: **Levpat**
**c/o Covestro AG**
**Gebäude 4825**
**51365 Leverkusen (DE)**

(56) Entgegenhaltungen:
**EP-A1- 2 604 641** **EP-A1- 2 604 642**
**WO-A1-2008/092767**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).



Printed by Jouve, 75001 PARIS (FR)

## Beschreibung

Die vorliegende Erfindung betrifft ein Verfahren zur Herstellung von Polyetherestercarbonatpolyolen durch Anlagerung wenigstens eines Alkylenoxids, wenigstens eines cyclischen Anhydrids sowie Kohlendioxid an eine oder mehrere H-funktionelle Startersubstanzen in Gegenwart eines Doppelmetallcyanid-Katalysators. Die Erfindung betrifft ferner ein Polyetherestercarbonatpolyol, welches nach diesem Verfahren erhältlich ist.

Die Herstellung von Polyethercarbonatpolyolen durch katalytische Umsetzung von Alkylenoxiden (Epoxiden) und Kohlendioxid in Anwesenheit von H-funktionellen Startersubstanzen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei R für einen organischen Rest wie Alkyl, Alkylaryl oder Aryl steht, der jeweils auch Heteroatome wie beispielsweise O, S, Si usw. enthalten kann, und wobei e, f und g für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Diese Reaktion (siehe Schema (I)) ist ökologisch sehr vorteilhaft, da diese Reaktion die Umsetzung eines Treibhausgases wie $CO_2$ zu einem Polymer darstellt. Als weiteres Produkt, eigentlich Nebenprodukt, entsteht das in Schema (I) gezeigte cyclische Carbonat (beispielsweise für R = $CH_3$ Propylencarbonat).

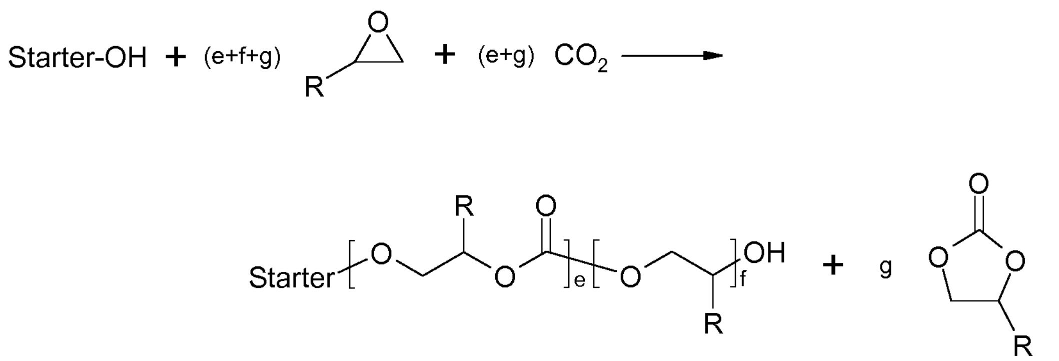

(I)

WO 20013/087582 A2 offenbart die Terpolymerisation von Propylenoxid, Anhydriden und Kohlendioxid in Gegenwart eines Doppelmetallcyanid-Katalysators wobei eine oder mehrere H-funktionelle Startersubstanzen im Reaktor vorgelegt werden.

EP 11194164.7 offenbart die Aktivierung von Doppelmetallcyanid-Katalysatoren für die Copolymerisation von Propylenoxid und Kohlendioxid in Gegenwart von cyclischen Anhydriden, dadurch gekennzeichnet, dass in einer ersten Aktivierungsstufe der DMC-Katalysator und mindestens eine H-funktionelle Startersubstanz im Reaktor vorgelegt werden. In beiden Anmeldungen ist eine Aktivierung des Doppelmetallcyanid-Katalysators in Abwesenheit von Startersubstanzen nicht offenbart.

EP-A 0 222 453 offenbart ein Verfahren zur Herstellung von Polycarbonaten aus Alkylenoxiden und Kohlendioxid unter Verwendung eines Katalysatorsystems aus DMC-Katalysator und einem Co-Katalysator wie Zinksulfat. Dabei wird die Polymerisation initiiert, indem einmalig ein Teil des Alkylenoxids mit dem Katalysatorsystem in Kontakt gebracht wird. Erst danach werden die Restmenge Alkylenoxid und das Kohlendioxid simultan zudosiert. Die bei EP-A 0 222 453 für den Aktivierungsschritt in den Beispielen 1 bis 7 angegebene Menge von 60 Gew.-% Alkylenoxidverbindung relativ zur H-funktionellen Starterverbindung ist hoch und hat den Nachteil, dass dies für großtechnische Anwendungen aufgrund der hohen Exothermie der Homo-Polymerisation von Alkylenoxidverbindungen ein gewisses Sicherheitsrisiko darstellt.

WO-A 2003/029325 offenbart ein Verfahren zur Herstellung von hochmolekularen aliphatischen Polyethercarbonatpolyolen (gewichtsmittleres Molekulargewicht größer als 30000 g/mol), bei dem ein Katalysator aus der Gruppe bestehend aus Zinkcarboxylat und Multimetallcyanidverbindung eingesetzt wird, der wasserfrei ist und der zunächst mit zumindest einer Teilmenge des Kohlendioxids in Kontakt gebracht wird, bevor man das Alkylenoxid zufügt. $CO_2$-Enddrücke von bis zu 150 bar stellen sehr hohe Anforderungen an den Reaktor sowie an die Sicherheit. Selbst durch den überaus hohen Druck von 150 bar wurden nur ca. 33 Gew.-% $CO_2$ bis maximal 42 Gew.-% $CO_2$ eingebaut. Die dargelegten Beispiele beschreiben die Verwendung eines Lösemittels (Toluol), das nach der Reaktion wieder thermisch abgetrennt werden muss, was zu erhöhtem Zeit- und Kostenaufwand führt. Des Weiteren weisen die Polymere mit einer Uneinheitlichkeit bzw. Polydispersität von 2,7 oder mehr eine sehr breite Molmassenverteilung auf.

WO-A 2008/092767 offenbart ein Verfahren zur Herstellung von Polyethercarbonatpolyolen, dadurch gekennzeichnet, dass eine oder mehrere H-funktionelle Startersubstanzen im Reaktor vorgelegt werden und dass eine oder

mehrere H-funktionelle Startersubstanzen während der Reaktion kontinuierlich in den Reaktor zudosiert werden. Dieses Verfahren hat also den Nachteil, dass eine oder mehrere H-funktionelle Startersubstanzen im Reaktor vorgelegt werden müssen.

EP-A 2 703 425 A1 offenbart ein Verfahren zur Herstellung von Polyethercarbonatpolyolen durch Anlagerung von Alkylenoxiden und Kohlendioxid an eine oder mehrere H-funktionelle Startersubstanzen in Gegenwart eines Doppelmetallcyanid-Katalysators, wobei ein Suspensionsmittel, das keine H-funktionellen Gruppen enthält und ausgewählt ist aus einer oder mehreren Verbindungen aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden, in einem Reaktor vorgelegt wird und eine oder mehrere H-funktionelle Startersubstanzen während der Reaktion kontinuierlich in den Reaktor zudosiert werden.

EP-A 2 604 641 offenbart ein Verfahren zur Herstellung von Polyetherestercarbonatpolyolen durch katalytische Anlagerung von Kohlendioxid, Alkylenoxiden und cyclischen Anhydriden an eine oder mehreren H-funktionellen Startersubstanzen in Gegenwart von Doppelmetallcyanid (DMC)-Katalysator.

EP-A 2 604 642 hat ein Verfahren zur Herstellung von Polyethercarbonatpolyolen durch katalytische Anlagerung von Kohlendioxid und Alkylenoxiden an eine oder mehreren H-funktionellen Startersubstanzen in Gegenwart von Doppelmetallcyanid (DMC)-Katalysator zum Gegenstand, wobei in einem ersten Aktivierungsstufe der DMC-Katalysator und mindestens eine H-funktionelle Startersubstanz vorgelegt werden und in einer zweiten Aktivierungsstufe durch Zugabe von mindestens einem Alkylenoxid, $CO_2$ und mindestens einem cyclischen Anhydrid der DMC-Katalysator aktiviert wird, und in einem dritten Schritt [Polymerisationsstufe] mindestens ein Alkylenoxid und $CO_2$ zugegeben werden.

Es war daher Aufgabe der vorliegenden Erfindung, ein Verfahren der eingangs genannten Art zur Verfügung zu stellen, bei dem keine H-funktionellen Startersubstanzen im Reaktor vorgelegt werden müssen. Ferner soll das Verfahren die Herstellung eines Produkts ermöglichen, welches einen hohen Gehalt an eingebautem $CO_2$ im resultierenden Polyetherestercarbonatpolyol aufweist.

Die Aufgabe wurde gelöst durch ein Verfahren zur Herstellung von Polyetherestercarbonatpolyolen durch Anlagerung wenigstens eines Alkylenoxids, wenigstens eines cyclischen Anhydrids sowie Kohlendioxid an eine oder mehrere H-funktionelle Startersubstanzen in Gegenwart eines Doppelmetallcyanid-Katalysators (kurz "DMC-Katalysator"), wobei das Verfahren dadurch gekennzeichnet ist, dass

(α) ein Suspensionsmittel, das keine H-funktionellen Gruppen enthält, in einem Reaktor vorgelegt wird und
(γ) eine oder mehrere H-funktionelle Startersubstanzen während der Reaktion kontinuierlich in den Reaktor zudosiert werden und die Dosierung eines oder mehrerer Alkylenoxide, des cyclischen Anhydrids und gegebenenfalls des Kohlendioxids simultan oder sequentiell erfolgen.

Unter einem Suspensionsmittel, das keine H-funktionellen Gruppen enthält, wird im Rahmen der vorliegenden Erfindung eine bei Raumtemperatur (25 °C) und bei Normaldruck (1013 hPa) flüssige Verbindung oder ein Gemisch von unter diesen Bedingungen flüssigen Verbindungen verstanden, wobei die Verbindungen keine Zerewitinoff-aktiven Wasserstoffatome aufweisen.

Das Anhydrid oder die Anhydride werden vorzugsweise in einer Gesamtmenge von ≥ 1 Gewichts-% bis ≤ 50 Gewichts-%, vorzugsweise von ≥ 5 Gewichts-% bis ≤ 20 Gewichts-%, bezogen auf die Gesamtmenge an zudosierten Alkylenoxiden, eingesetzt.

Zu Schritt (α):

Vorzugsweise wird in Schritt (α) ein Suspensionsmittel, das keine H-funktionellen Gruppen enthält, im Reaktor gegebenenfalls gemeinsam mit DMC-Katalysator vorgelegt, und dabei keine H-funktionelle Startersubstanz im Reaktor vorgelegt. Alternativ können in Schritt (α) auch ein Suspensionsmittel, das keine H-funktionellen Gruppen enthält, und zusätzlich eine Teilmenge der H-funktionellen Startersubstanzen sowie gegebenenfalls der DMC-Katalysator im Reaktor vorgelegt werden.

Der DMC-Katalysator wird vorzugsweise in einer Menge eingesetzt, so dass der Gehalt an DMC-Katalysator im resultierenden Reaktionsprodukt 10 bis 10000 ppm, besonders bevorzugt 20 bis 5000 ppm und höchst bevorzugt 50 bis 500 ppm beträgt.

In einer bevorzugten Ausführungsform wird in das resultierende Gemisch aus Suspensionsmittel und DMC-Katalysator bei einer Temperatur von 90 bis 150°C, besonders bevorzugt von 100 bis 140°C Inertgas (beispielsweise Argon oder Stickstoff), ein Inertgas-Kohlendioxid-Gemisch oder Kohlendioxid eingeleitet und gleichzeitig ein reduzierter Druck (absolut) von 10 mbar bis 800 mbar, besonders bevorzugt von 50 mbar bis 200 mbar angelegt.

In einer alternativen bevorzugten Ausführungsform wird das resultierende Gemisch aus Suspensionsmittel und DMC-Katalysator bei einer Temperatur von 90 bis 150°C, besonders bevorzugt von 100 bis 140°C mindestens einmal,

vorzugsweise dreimal mit 1,5 bar bis 10 bar (absolut), besonders bevorzugt 3 bar bis 6 bar (absolut) eines Inertgases (beispielsweise Argon oder Stickstoff), eines Inertgas-Kohlendioxid-Gemisches oder Kohlendioxid beaufschlagt und jeweils anschließend der Überdruck auf ca. 1 bar (absolut) reduziert.

Der DMC-Katalysator kann in fester Form oder als Suspension in einem Suspensionsmittel bzw. in einer Mischung aus mindestens zwei Suspensionsmitteln zugegeben werden. Bevorzugt wird das Suspensionsmittel, das keine H-funktionellen Gruppen enthält, gemeinsam mit DMC-Katalysator im Reaktor vorgelegt.

In einer weiteren bevorzugten Ausführungsform wird in Schritt (α)

(α-I) das Suspensionsmittel oder ein Gemisch aus mindestens zwei Suspensionsmitteln vorgelegt und

(α-II) die Temperatur des Suspensionsmittels oder des Gemisches aus mindestens zwei Suspensionsmittel auf 50 bis 200°C, bevorzugt 80 bis 160°C, besonders bevorzugt 100 bis 140°C gebracht und/oder der Druck im Reaktor auf weniger als 500 mbar, bevorzugt 5 mbar bis 100 mbar erniedrigt, wobei gegebenenfalls ein Inertgas-Strom (beispielsweise von Argon oder Stickstoff), ein Inertgas-Kohlendioxid-Strom oder ein Kohlendioxid-Strom durch den Reaktor geleitet wird,

wobei der Doppelmetallcyanid-Katalysator zum Suspensionsmittel oder zum Gemisch aus mindestens zwei Suspensionsmitteln in Schritt (α-I) oder unmittelbar anschließend in Schritt (α-II) zugesetzt wird, und
wobei das Suspensionsmittel keine H-funktionellen Gruppen enthält.

<u>Zu Schritt (β):</u>

In weiterer Ausgestaltung des erfindungsgemäßen Verfahrens kann anschließend an den Schritt (α) ein Schritt (β) vorgesehen sein, in welchem zu dem Gemisch aus Schritt (α) eine Teilmenge an Alkylenoxid bei Temperaturen von 90 bis 150°C zugegeben und danach die Zugabe der Alkylenoxidverbindung unterbrochen wird. Schritt (β) dient der Aktivierung des DMC-Katalysators. Dieser Schritt kann gegebenenfalls unter Inertgasatmosphäre, unter einer Atmosphäre aus Inertgas-Kohlendioxid-Gemisch oder unter einer Kohlendioxid-Atmosphäre durchgeführt werden.

Als Aktivierung im Sinne dieser Erfindung wird ein Schritt bezeichnet, bei dem eine Teilmenge Alkylenoxidverbindung oder eine Teilmenge an Alkylenoxidverbindung und cyclischem Anhydrid bei Temperaturen von 90 bis 150°C zur DMC-Katalysator-Suspension zugegeben und dann die Zugabe der Alkylenoxidverbindung und/oder des cyclischen Anhydrids unterbrochen wird, wobei aufgrund einer folgenden exothermen chemischen Reaktion eine Wärmeentwicklung, die zu einer Temperaturspitze ("Hotspot") führen kann, sowie aufgrund der Umsetzung von Alkylenoxid und gegebenenfalls cyclischem Anhydrid und $CO_2$ ein Druckabfall im Reaktor beobachtet wird.

Der Verfahrensschritt der Aktivierung ist die Zeitspanne von der Zugabe der Teilmenge an Alkylenoxidverbindung, gegebenenfalls in Gegenwart von cyclischem Anhydrid und/oder $CO_2$, zum DMC-Katalysator bis zum Auftreten der Wärmeentwicklung. Gegebenenfalls kann die Teilmenge Alkylenoxidverbindung in mehreren Einzelschritten, gegebenenfalls in Gegenwart von cyclischem Anhydrid und/oder $CO_2$, zum DMC-Katalysator gegeben werden und dann jeweils die Zugabe der Alkylenoxidverbindung unterbrochen werden. Im diesem Fall umfasst der Verfahrensschritt der Aktivierung die Zeitspanne von der Zugabe der ersten Teilmenge an Alkylenoxidverbindung, gegebenenfalls in Gegenwart von cyclischem Anhydrid und/oder $CO_2$, zum DMC-Katalysator bis zum Auftreten der Wärmeentwicklung nach Zugabe der letzten Teilmenge an Alkylenoxidverbindung. Im Allgemeinen kann dem Aktivierungsschritt ein Schritt zum Trocknen des DMC-Katalysators und ggf. der H-funktionellen Starterverbindung bei erhöhter Temperatur und/oder reduziertem Druck, gegebenenfalls unter Durchleiten eines Inertgases durch die Reaktionsmischung, vorgelagert sein.

Die Dosierung eines oder mehrerer Alkylenoxide (und gegebenenfalls des cyclischen Anhydrids und/oder des Kohlendioxids) kann prinzipiell in unterschiedlicher Weise erfolgen. Der Start der Dosierung kann aus dem Vakuum heraus oder bei einem zuvor gewählten Vordruck erfolgen. Der Vordruck wird bevorzugt durch Einleiten eines Inertgases (wie beispielsweise Stickstoff oder Argon) oder von Kohlendioxid eingestellt, wobei der Druck(absolut) 5 mbar bis 100 bar, vorzugsweise 10 mbar bis 50 bar und bevorzugt 20 mbar bis 50 bar beträgt.

In einer bevorzugten Ausführungsform beträgt die bei der Aktivierung in Schritt (β) eingesetzte Menge von einem oder mehreren Alkylenoxiden 0,1 bis 25,0 Gew.-%, bevorzugt 1,0 bis 20,0 Gew.-%, besonders bevorzugt 2,0 bis 16,0 Gew.-% (bezogen auf die im Schritt (α) eingesetzte Menge an Suspensionsmittel). Gegebenenfalls wird gemeinsam mit dem Alkylenoxid eine Teilmenge des cyclischen Anhydrids dosiert. Die eingesetzte Menge von cyclischem Anhydrid beträgt bevorzugt 0,1 bis 10,0 Gew.-%, bevorzugt 0,5 bis 7,0 Gew.-%, besonders bevorzugt 1,0 bis 5,0 Gew.-% (bezogen auf die im Schritt (α) eingesetzte Menge an Suspensionsmittel).

Das Alkylenoxid und gegebenenfalls das cyclische Anhydrid können in einem Schritt oder portionsweise in mehreren Teilmengen zugegeben werden. Bevorzugt wird nach Zugabe einer Teilmenge der Alkylenoxidverbindung und gegebenenfalls des cyclischen Anhydrids die Zugabe der Alkylenoxidverbindung und gegebenenfalls des cyclischen Anhydrids bis zum Auftreten der Wärmeentwicklung unterbrochen und erst dann die nächste Teilmenge an Alkylenoxidverbindung und gegebenenfalls cyclischem Anhydrid zugegeben. In bevorzugter Ausgestaltung des erfindungsgemäßen Verfahrens erfolgt die Aktivierung in Schritt (β) zweistufig, wobei

(β1) in einer ersten Aktivierungsstufe die Zugabe einer ersten Teilmenge von Alkylenoxid und gegebenenfalls cyclischem Anhydrid unter Inertgasatmosphäre erfolgt und
(β2) in einer zweiten Aktivierungsstufe die Zugabe einer zweiten Teilmenge von Alkylenoxid und gegebenenfalls cyclischem Anhydrid unter Kohlendioxid-Atmosphäre erfolgt.

Zu Schritt (γ):

Die Dosierung einer oder mehrerer H-funktioneller Startersubstanz(en), eines oder mehrerer Alkylenoxid(e), des cyclischen Anhydrids und gegebenenfalls des Kohlendioxids kann simultan oder sequentiell (portionsweise) erfolgen. Vorzugsweise erfolgt die Dosierung der einen oder mehreren H-funktionellen Startersubstanzen während der Reaktion in den Reaktor kontinuierlich und wenigstens ein Alkylenoxid, wenigstens ein cyclisches Anhydrid und gegebenenfalls das Kohlendioxid werden während der Reaktion in den Reaktor simultan oder sequentiell (portionsweise) hinzudosiert. Besonders bevorzugt erfolgt die Dosierung der einen oder mehreren H-funktionellen Startersubstanzen, des wenigstens einen Alkylenoxids, des wenigstens einen cyclischen Anhydrids und des Kohlendioxids während der Reaktion in den Reaktor simultan und kontinuierlich. Beispielsweise kann die gesamte Kohlendioxidmenge, die Menge an H-funktionellen Startersubstanzen und/oder die in Schritt (γ) dosierte Menge an Alkylenoxiden und cyclischem Anhydrid auf einmal oder kontinuierlich zugegeben werden. Der hier verwendete Begriff "kontinuierlich" kann als Modus der Zugabe eines Reaktanden so definiert werden, dass eine für die Copolymerisation wirksame Konzentration des Reaktanden aufrechterhalten wird, d.h. die Dosierung kann beispielsweise mit einer konstanten Dosierrate, mit einer variierenden Dosierrate oder portionsweise erfolgen.

Unter dem Begriff "Copolymerisation" wird im Rahmen der vorliegenden Erfindung die Polymerisation von wenigstens zwei unterschiedlichen monomeren Verbindungen verstanden, das heißt, auch die Polymerisation von drei unterschiedlichen Monomeren, die allenthalben als "Terpolymerisation" bezeichnet wird, oder auch die Polymerisation von vier oder mehr unterschiedlichen Monomeren umfasst.

Es ist möglich, während der Zugabe des Alkylenoxids, des cyclischen Anhydrids und/oder der H-funktionellen Startersubstanzen den $CO_2$-Druck allmählich oder schrittweise zu steigern oder zu senken oder gleich zu lassen. Vorzugsweise wird der Gesamtdruck während der Reaktion durch eine Nachdosierung an Kohlendioxid konstant gehalten. Die Dosierung eines oder mehrerer Alkylenoxid(e) und/oder der einen oder mehreren H-funktionellen Startersubstanz(en) erfolgt simultan oder sequentiell zur Kohlendioxid-Dosierung.

Es ist möglich, das Alkylenoxid und/oder das cyclische Anhydrid mit konstanter Dosierrate zu dosieren oder die Dosierrate allmählich oder schrittweise zu steigern oder zu senken oder das Alkylenoxid und/oder das cyclische Anhydrid portionsweise zuzugeben. Bevorzugt wird das Alkylenoxid und/oder das cyclische Anhydrid mit konstanter Dosierrate dem Reaktionsgemisch zugegeben. Werden mehrere Alkylenoxide und/oder cyclische Anhydride zur Synthese der Polyetherestercarbonatpolyole eingesetzt, so können die Alkylenoxide und/oder die cyclischen Anhydride einzeln oder als Gemisch dosiert werden.

Die Zugabe des Alkylenoxids und des cyclischen Anhydrids erfolgt bevorzugt über separate Dosierstellen. Es kann jedoch auch eine Mischung aus Alkylenoxid und cyclischem Anhydrid dosiert werden. Die Dosierung der Alkylenoxide bzw. der H-funktionellen Startersubstanzen kann simultan oder sequentiell über jeweils separate Dosierungen (Zugaben) erfolgen oder über eine oder mehrere Dosierungen, wobei die Alkylenoxide bzw. die H-funktionellen Startersubstanzen einzeln oder als Gemisch dosiert werden können. Über die Art und/oder Reihenfolge der Dosierung der H-funktionellen Startersubstanzen, der Alkylenoxide, des cyclischen Anhydrids und/oder des Kohlendioxids ist es möglich, statistische, alternierende, blockartige oder gradientenartige Polyetherestercarbonatpolyole zu synthetisieren.

In einer bevorzugten Ausführungsform wird in Schritt (γ) die Dosierung der einen oder mehreren H-funktionellen Startersubstanz(en) zeitlich vor der Zugabe des Alkylenoxids und/oder des cyclischen Anhydrids beendet.

Vorzugsweise wird ein Überschuss an Kohlendioxid bezogen auf die berechnete Menge an eingebautem Kohlendioxid im Polyetherestercarbonatpolyol eingesetzt, da bedingt durch die Reaktionsträgheit von Kohlendioxid ein Überschuss von Kohlendioxid von Vorteil ist. Die Menge an Kohlendioxid kann über den Gesamtdruck bei den jeweiligen Reaktionsbedingungen festgelegt werden. Als Gesamtdruck (absolut) hat sich der Bereich von 0,01 bis 120 bar, bevorzugt 0,1 bis 110 bar, besonders bevorzugt von 1 bis 100 bar für die Copolymerisation zur Herstellung der Polyetherestercarbonatpolyole als vorteilhaft erwiesen. Es ist möglich, das Kohlendioxid kontinuierlich oder diskontinuierlich zuzuführen. Dies hängt davon ab, wie schnell die Alkylenoxide verbraucht werden und ob das Produkt gegebenenfalls $CO_2$-freie Polyether-Blöcke enthalten soll. Die Menge des Kohlendioxids (angegeben als Druck) kann bei der Zugabe der Alkylenoxide ebenso variieren. $CO_2$ kann auch als Feststoff in den Reaktor gegeben werden und dann unter den gewählten Reaktionsbedingungen in den gasförmigen, gelösten, flüssigen und/oder überkritischen Zustand übergehen.

Eine bevorzugte Ausführungsform des erfindungsgemäßen Verfahrens ist unter anderem dadurch gekennzeichnet, dass in Schritt (γ) die Gesamtmenge der einen oder mehreren H-funktionellen Startersubstanz(en) zugegeben

wird. Diese Zugabe kann mit einer konstanten Dosierrate, mit einer variierenden Dosierrate oder portionsweise erfolgen.

Für das erfindungsgemäße Verfahren hat sich weiterhin gezeigt, dass die Copolymerisation (Schritt (γ)) zur Herstellung der Polyetherestercarbonatpolyole vorteilhafterweise bei 50 bis 150°C, bevorzugt bei 60 bis 145°C, besonders bevorzugt bei 70 bis 140°C und ganz besonders bevorzugt bei 90 bis 130°C durchgeführt wird. Werden Temperaturen unterhalb von 50°C eingestellt, wird die Reaktion im Allgemeinen sehr langsam. Bei Temperaturen oberhalb von 150°C steigt die Menge an unerwünschten Nebenprodukten stark an.

Die Dosierung des Alkylenoxids, des cyclischen Anhydrids, der H-funktionellen Starterverbindung und des DMC-Katalysators kann über separate oder gemeinsame Dosierstellen erfolgen. In einer bevorzugten Ausführungsform werden das Alkylenoxid und die H-funktionelle Starterverbindung über separate Dosierstellen kontinuierlich dem Reaktionsgemisch zugeführt. Diese Zugabe der einen oder mehreren H-funktionellen Startersubstanz(en) kann als kontinuierliche Zudosierung in den Reaktor oder portionsweise erfolgen.

Die Schritte (α), (β) und (γ) können in demselben Reaktor oder jeweils separat in unterschiedlichen Reaktoren durchgeführt werden. Besonders bevorzugte Reaktortypen sind: Rohrreaktoren, Rührkessel, Schlaufenreaktoren.

Polyetherestercarbonatpolyole können in einem Rührkessel hergestellt werden, wobei der Rührkessel je nach Ausführungsform und Betriebsweise über den Reaktormantel, innen liegende und/oder in einem Umpumpkreislauf befindliche Kühlflächen gekühlt wird. Sowohl in der semibatch Anwendung, bei der das Produkt erst nach Ende der Reaktion entnommen wird, als auch in der kontinuierlichen Anwendung, bei der das Produkt kontinuierlich entnommen wird, ist besonders auf die Dosiergeschwindigkeit des Alkylenoxids zu achten. Sie ist so einzustellen, dass trotz der inhibierenden Wirkung des Kohlendioxids die Alkylenoxide genügend schnell abreagieren. Die Konzentration an freien Alkylenoxiden in der Reaktionsmischung während des Aktivierungsschritts (Schritt β) beträgt vorzugsweise > 0 bis 100 Gew.-%, besonders bevorzugt > 0 bis 50 Gew-%, höchst bevorzugt > 0 bis 20 Gew.-% (jeweils bezogen auf das Gewicht der Reaktionsmischung). Die Konzentration an freien Alkylenoxiden in der Reaktionsmischung während der Reaktion (Schritt γ) beträgt vorzugsweise > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung).

In einer bevorzugten Ausführungsform wird die gemäß den Schritten (α) und (β) resultierende aktivierte DMC-Katalysator-Suspensionsmittel-Mischung in demselben Reaktor weiter mit einem oder mehreren Alkylenoxid(en), einer oder mehreren Startersubstanz(en) und Kohlendioxid umgesetzt. In einer weiteren bevorzugten Ausführungsform wird die gemäß den Schritten (α) und (β) resultierende aktivierte DMC-Katalysator-Suspensionsmittel-Mischung in einem anderen Reaktionsbehältnis (beispielsweise einem Rührkessel, Rohrreaktor oder Schlaufenreaktor) weiter mit Alkylenoxiden, einer oder mehreren Startersubstanz(en) und Kohlendioxid umgesetzt.

Bei Reaktionsführung in einem Rohrreaktor werden die gemäß den Schritten (α) und (β) resultierende aktivierte Katalysator-Suspensionsmittel-Mischung, eine oder mehrere H-funktionelle Startersubstanz(en), ein oder mehrere Alkylenoxid(e) und Kohlendioxid kontinuierlich durch ein Rohr gepumpt. Die molaren Verhältnisse der Reaktionspartner variieren je nach gewünschtem Polymer. In einer bevorzugten Ausführungsform wird hierbei Kohlendioxid in seiner flüssigen oder überkritischen Form zudosiert, um eine optimale Mischbarkeit der Komponenten zu ermöglichen. Vorteilhafterweise werden Mischelemente zur besseren Durchmischung der Reaktionspartner eingebaut, wie sie zum Beispiel von der Firma Ehrfeld Mikrotechnik BTS GmbH vertrieben werden, oder Mischer-Wärmetauscherelemente, die gleichzeitig die Durchmischung und Wärmeabfuhr verbessern.

Schlaufenreaktoren können ebenfalls zur Herstellung von Polyetherestercarbonatpolyolen verwendet werden. Hierunter fallen im Allgemeinen Reaktoren mit Stoffrückführung, wie beispielsweise ein Strahlschlaufenreaktor, der auch kontinuierlich betrieben werden kann, oder ein schlaufenförmig ausgelegter Rohrreaktor mit geeigneten Vorrichtungen für die Umwälzung der Reaktionsmischung oder eine Schlaufe von mehreren hintereinander geschalteten Rohrreaktoren. Der Einsatz eines Schlaufenreaktors ist insbesondere deshalb von Vorteil, weil hier eine Rückvermischung realisiert werden kann, so dass die Konzentration an freien Alkylenoxiden in der Reaktionsmischung im optimalen Bereich, vorzugsweise im Bereich > 0 bis 40 Gew.-%, besonders bevorzugt > 0 bis 25 Gew.-%, höchst bevorzugt > 0 bis 15 Gew.-% (jeweils bezogen auf das Gewicht der Reaktionsmischung) gehalten werden kann.

Bevorzugt werden die Polyetherestercarbonatpolyole in einem kontinuierlichen Verfahren hergestellt, das sowohl eine kontinuierliche Copolymerisation als auch eine kontinuierliche Zugabe der einen oder mehreren H-funktionellen Startersubstanz(en) umfasst.

Gegenstand der Erfindung ist daher auch ein Verfahren wobei in Schritt (γ) eine oder mehrere H-funktionelle Startersubstanz(en), ein oder mehrere Alkylenoxid(e), cyclisches Anhydrid sowie DMC-Katalysator in Gegenwart von Kohlendioxid ("Copolymerisation") kontinuierlich in den Reaktor dosiert werden und wobei das resultierende Reaktionsgemisch (enthaltend das Reaktionsprodukt) kontinuierlich aus dem Reaktor entfernt wird. Vorzugsweise wird dabei in Schritt (γ) der DMC-Katalysator in H-funktioneller Starterverbindung suspendiert kontinuierlich zugegeben.

Beispielsweise wird für das kontinuierliche Verfahren zur Herstellung der Polyetherestercarbonatpolyole gemäß den Schritten (α) und (β) eine aktivierte DMC-Katalysator-Suspensionsmittel-Mischung hergestellt, dann werden gemäß Schritt (γ)

(γ1) jeweils eine Teilmenge an einer oder mehreren H-funktionellen Startersubstanz(en), einem oder mehreren Alkylenoxid(en) und Kohlendioxid zum Initiieren der Copolymerisation zudosiert, und

(γ2) während des Fortschreitens der Copolymerisation jeweils die verbleibende Menge an DMC-Katalysator, einer oder mehreren Startersubstanz(en) und Alkylenoxid(en) in Gegenwart von Kohlendioxid kontinuierlich zudosiert, wobei gleichzeitig resultierendes Reaktionsgemisch kontinuierlich aus dem Reaktor entfernt wird.

In Schritt (γ) wird der DMC-Katalysator bevorzugt suspendiert in der H-funktionellen Starterverbindung zugegeben, wobei die Menge vorzugsweise so gewählt ist, dass der Gehalt an DMC-Katalysator im resultierenden Reaktionsprodukt 10 bis 10000 ppm, besonders bevorzugt 20 bis 5000 ppm und höchst bevorzugt 50 bis 500 ppm beträgt.

Vorzugsweise werden die Schritte (α) und (β) in einem ersten Reaktor durchgeführt, und das resultierende Reaktionsgemisch dann in einen zweiten Reaktor für die Copolymerisation gemäß Schritt (γ) überführt. Es ist aber auch möglich, die Schritte (α), (β) und (γ) in einem Reaktor durchzuführen.

Es ist auch gefunden worden, dass das Verfahren der vorliegenden Erfindung zur Herstellung großer Mengen des Polyetherestercarbonatpolyols verwendet werden kann, wobei anfänglich ein gemäß den Schritten (α) und (β) in einem Suspensionsmittel aktivierter DMC-Katalysator verwendet wird, und während der Copolymerisation (γ) der DMC-Katalysator ohne vorherige Aktivierung zugesetzt wird.

Ein besonders vorteilhaftes Merkmal der bevorzugten Ausführungsform der vorliegenden Erfindung ist also die Fähigkeit zur Verwendung von "frischen" DMC-Katalysatoren ohne Aktivierung für die Teilmenge an DMC-Katalysator, die kontinuierlich im Schritt (γ) zugegeben wird. Eine analog zu Schritt (β) durchzuführende Aktivierung von DMC-Katalysatoren umfasst nicht nur zusätzliche Aufmerksamkeit der Bedienungsperson, wodurch sich die Fertigungskosten erhöhen, sondern sie erfordert auch einen Druck-Reaktionsbehälter, wodurch sich auch die Kapitalkosten beim Bau einer entsprechenden Produktionsanlage erhöhen. Hier wird "frischer" Katalysator als nicht aktivierter DMC-Katalysator in fester Form oder in Form einer Aufschlämmung in einem Suspensionsmittel oder einer Startersubstanz definiert. Die Fähigkeit des vorliegenden Verfahrens zur Verwendung von frischem, nicht aktivierten DMC-Katalysator im Schritt (γ) ermöglicht signifikante Einsparungen bei der kommerziellen Herstellung von Polyetherestercarbonatpolyolen und ist eine bevorzugte Ausführungsform der vorliegenden Erfindung.

Der hier verwendete Begriff "kontinuierlich" kann als Modus der Zugabe eines relevanten Katalysators oder Reaktanden so definiert werden, dass eine wirksame Konzentration des DMC-Katalysators oder des Reaktanden im Wesentlichen kontinuierlich aufrechterhalten wird. Die Katalysatorzufuhr kann echt kontinuierlich oder in relativ eng beabstandeten Inkrementen erfolgen. Gleichermaßen kann eine kontinuierliche Starterzugabe echt kontinuierlich sein oder in Inkrementen erfolgen. Es würde nicht vom vorliegenden Verfahren abweichen, einen DMC-Katalysator oder Reaktanden inkrementell so zuzugeben, dass die Konzentration der zugegebenen Materialien für einige Zeit vor der nächsten inkrementellen Zugabe im Wesentlichen auf null abfällt. Es ist jedoch bevorzugt, dass die DMC-Katalysatorkonzentration während des Hauptteils des Verlaufs der kontinuierlichen Reaktion im Wesentlichen auf derselben Konzentration gehalten wird und dass Startersubstanz während des Hauptteils des Copolymerisations-Verfahrens vorhanden ist. Eine inkrementelle Zugabe von DMC-Katalysator und/oder Reaktant, die die Beschaffenheit des Produkts nicht wesentlich beeinflusst, ist in demjenigen Sinn, in dem der Begriff hier verwendet wird, dennoch "kontinuierlich". Es ist beispielsweise machbar, eine Rückführungsschleife bereitzustellen, in der ein Teil der reagierenden Mischung zu einem vorherigen Punkt im Verfahren zurückgeführt wird, wodurch durch inkrementelle Zugaben bewirkte Diskontinuitäten geglättet werden.

Schritt (δ)

Optional kann in einem Schritt (δ) das in Schritt (γ) kontinuierlich entfernte Reaktionsgemisch, welches im Allgemeinen einen Gehalt von 0,05 Gew.-% bis 10 Gew.-% Alkylenoxid enthält, in einen Nachreaktor überführt werden, in dem im Wege einer Nachreaktion der Gehalt an freiem Alkylenoxid auf weniger als 0,05 Gew.-% im Reaktionsgemisch reduziert wird. Als Nachreaktor kann beispielsweise ein Rohrreaktor, ein Schlaufenreaktor oder ein Rührkessel dienen.

Bevorzugt liegt der Druck in diesem Nachreaktor bei demselben Druck wie in dem Reaktionsapparat, in dem der Reaktionsschritt (γ) durchgeführt wird. Der Druck in dem nachgeschalteten Reaktor kann jedoch auch höher oder niedriger gewählt werden. In einer weiteren bevorzugten Ausführungsform wird das Kohlendioxid nach dem Reaktionsschritt (γ) ganz oder teilweise abgelassen und der nachgeschaltete Reaktor bei Normaldruck oder einem geringen Überdruck betrieben. Die Temperatur in dem nachgeschalteten Reaktor liegt bevorzugt bei 50 bis 150°C und besonders bevorzugt bei 80 bis 140°C.

Bei dem erfindungsgemäßen Verfahren wird zunächst ein Suspensionsmittel, das keine H-funktionellen Gruppen enthält, im Reaktor vorgelegt. Anschließend wird die für die Polyaddition benötigte Menge an DMC-Katalysator, der bevorzugt nicht aktiviert ist, in den Reaktor gegeben. Die Reihenfolge der Zugabe ist dabei nicht entscheidend. Es kann auch erst der DMC-Katalysator und anschließend das Suspensionsmittel in den Reaktor gefüllt werden. Alternativ kann auch erst der DMC-Katalysator in dem inerten Suspensionsmittel suspendiert und anschließend die Suspension in den

Reaktor gefüllt werden. Durch das Suspensionsmittel wird eine ausreichende Wärmeaustauschfläche mit der Reaktorwand oder im Reaktor eingebauten Kühlelementen zur Verfügung gestellt, so dass die freigesetzte Reaktionswärme sehr gut abgeführt werden kann. Außerdem stellt das Suspensionsmittel bei einem Kühlungsausfall Wärmekapazität zur Verfügung, so dass die Temperatur in diesem Falle unterhalb der Zersetzungstemperatur des Reaktionsgemisches gehalten werden kann.

Die erfindungsgemäß eingesetzten Suspensionsmittel enthalten keine H-funktionellen Gruppen. Als Suspensionsmittel sind alle polar-aprotischen, schwach polar-aprotischen und unpolar-aprotischen Lösungsmittel geeignet, die jeweils keine H-funktionellen Gruppen enthalten. Als Suspensionsmittel können auch eine Mischung aus zwei oder mehrerer dieser Suspensionsmittel eingesetzt werden. Beispielhaft seien an dieser Stelle folgende polar-aprotischen Lösungsmittel genannt: 4-Methyl-2-oxo-1,3-dioxolan (im Folgenden auch als cyclisches Propylencarbonat oder cPC bezeichnet), 1,3-Dioxolan-2-on (im Folgenden auch als cyclisches Ethylencarbonat oder cEC bezeichnet), Aceton, Methylethylketon, Acetonitril, Nitromethan, Dimethylsulfoxid, Sulfolan, Dimethylformamid, Dimethylacetamid und *N*-Methylpyrrolidon. Zu der Gruppe der unpolar- und schwach polar-aprotischen Lösungsmittel zählen z.B. Ether, wie z.B. Dioxan, Diethylether, Methyl-tert-Butylether und Tetrahydrofuran, Ester, wie z.B. Essigsäureethylester und Essigsäurebutylester, Kohlenwasserstoffe, wie z.B. Pentan, n-Hexan, Benzol und alkylierte Benzolderivate (z.B. Toluol, Xylol, Ethylbenzol) und chlorierte Kohlenwasserstoffe, wie z.B., Chloroform, Chlorbenzol, Dichlorbenzol und Tetrachlorkohlenstoff. Bevorzugt als Suspensionsmittel werden 4-Methyl-2-oxo-1,3-dioxolan, 1,3-Dioxolan-2-on, Toluol, Xylol, Ethylbenzol, Chlorbenzol und Dichlorbenzol sowie Mischungen zweier oder mehrerer dieser Suspensionsmittel eingesetzt, besonders bevorzugt ist 4-Methyl-2-oxo-1,3-dioxolan und 1,3-Dioxolan-2-on oder eine Mischung aus 4-Methyl-2-oxo-1,3-dioxolan und 1,3-Dioxolan-2-on. Ebenfalls als Suspensionsmittel, die keine H-funktionellen Gruppen enthalten, sind Verbindungen geeignet, die ausgewählt sind aus der Gruppe bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe. Diese werden nach Zugabe der H-funktionellen Startersubstanz in das erhaltene Polyetherestercarbonatpolyol mit eingebaut. Als Suspensionsmittel kann auch eine Mischung aus zwei oder mehreren der genannten Suspensionsmittel eingesetzt werden.

**Aliphatische oder aromatische Lactone** in Sinne der Erfindung sind cyclische Verbindungen enthaltend eine Esterbindung im Ring, vorzugsweise Verbindungen der Formeln (II), (III) oder (IV),

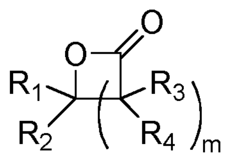

(II)

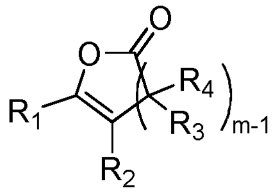

(III)

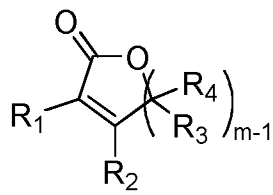

(IV)

wobei

R1, R2, R3 und R4 unabhängig voneinander für Wasserstoff, einen linearen oder verzweigen gegebenenfalls Heteroatome enthaltenden C1 bis C22 Alkylrest, einen linearen oder verzweigen, ein- oder mehrfach ungesättigten, gegebenenfalls Heteroatome enthaltenden C1 bis C22 Alkenylrest oder einen gegebenenfalls einfach oder mehrfach substituierten, gegebenenfalls Heteroatome enthaltenden C6 bis C18 Arylrest stehen oder Glieder eines gesättigten oder ungesättigten 4 bis 7 gliedrigen gegebenenfalls Heteroatome und/oder Ethergruppen enthaltenen Rings oder polycyclischen Systems sein können,
wobei die Verbindungen der Formel (II) auch durch Chlor, Brom, Nitrogruppen oder Alkoxygruppen substituiert sein können,
m eine ganze Zahl größer gleich 1, bevorzugt 1, 2, 3 oder 4 ist,
und R3 und R4 in Wiederholungseinheiten ($m > 1$) jeweils unterschiedlich sein können.

Bevorzugte Verbindungen der Formeln (II), (III) oder (IV) sind
4-gliedrige Ringlactone wie ß-Propiolacton, ß-Butyrolacton, ß-Isovalerolacton, ß-Caprolacton, β-Isocaprolacton, ß-Methyl-ß-valerolacton,
5-gliedrige Ringlactone, wie γ-Butyrolacton, γ-Valerolacton, 5-Methylfuran-2(3H)-on, 5-Methylidenedihydrofuran-2(3H)-on, 5-Hydroxyfuran-2(5H)-on, 2-Benzofuran-1(3H)-on und 6-Methy-2-benzofuran-1(3H)-on,
6-gliedrige Ringlactone, wie δ-Valerolacton, 1,4-Dioxan-2-on, Dihydrocumarin, 1H-Isochromen-1-on, 8H-pyrano[3,4-b]pyridine-8-on, 1,4-Dihydro-3H-isochromen-3-on, 7,8-Dihydro-5H-pyrano[4,3-b]pyridine-5-on, 4-Methyl-3,4-dihydro-1H-pyrano[3,4-b]pyridine-1-on, 6-Hydroxy-3,4-dihydro-1H-isochromen-1-on, 7-Hydroxy-3,4-dihydro-2H-chromen-2-on,

3-Ethyl-1H-isochromen-1-on, 3-(Hydroxymethyl)-1H-isochromen-1-on, 9-Hydroxy-1H,3H-benzo[de]isochromen-1-on, 6,7-Dimethoxy-1,4-dihydro-3H-isochromen-3-on und 3-Phenyl-3,4-dihydro-1H-isochromen-1-on,
7-gliedrige Ringlactone, wie ε-Caprolacton, 1,5-Dioxepan-2-on, 5-Methyloxepan-2-on, Oxepane-2,7-dion, thiepan-2-on, 5-Chlorooxepan-2-on, (4*S*)-4-(Propan-2-yl)oxepan-2-on, 7-Butyloxepan-2-on, 5-(4-Aminobuthyl)oxepan-2-on, 5-Phenyloxepan-2-on, 7-Hexyloxepan-2-on, (5*S*,7*S*)-5-Methyl-7-(propan-2-yl)oxepan-2-on, 4-Methyl-7-(propan-2-yl)oxepan-2-on,
höhergliedrige Ringlactone, wie (7*E*)-Oxacycloheptadec-7-en-2-on.

Besonders bevorzugt ist ε-Caprolacton und Dihydrocumarin.

Lactide im Sinne der Erfindung sind cyclische Verbindungen enthaltend zwei oder mehr Esterbindungen im Ring, vorzugsweise Verbindungen der Formel (V),

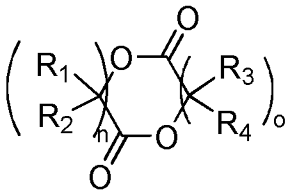

(V)

wobei R1, R2, R3 und R4 die oben genannte Bedeutung haben,
und n und o unabhängig voneinander eine ganze Zahl größer gleich 1, bevorzugt 1, 2, 3 oder 4 ist, und R1 und R2 in Wiederholungseinheiten (n>1) und R3 und R4 in Wiederholungseinheiten (o > 1) jeweils unterschiedlich sein können.

Bevorzugte Verbindungen der Formeln (V) sind Glycolid (1,4-Dioxan-2,5-dion), L-Lactid (L-3,6-Dimethyl-1,4-dioxan-2,5-dion), D-Lactid, DL-Lactid, Mesolactid und 3-Methyl-1,4-dioxan-2,5-dion, 3-Hexyl-6-methyl-1,4-dioxane-2,5-dione, 3,6-Di(but-3-en-1-yl)-1,4-dioxane-2,5-dion (jeweils einschließlich optisch aktiver Formen). Besonders bevorzugt ist L-Lactid.

Als cyclische Carbonate mit mindestens drei gegebenenfalls substituierten Methylengruppen zwischen den Sauerstoffatomen der Carbonatgruppe werden vorzugsweise Verbindungen der Formel (VI) eingesetzt,

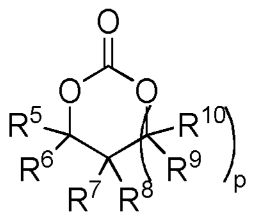

(VI)

wobei

R5, R6, R7, R8, R9 und R10 unabhängig voneinander für Wasserstoff, einen linearen oder verzweigen, gegebenenfalls Heteroatome enthaltenden C1 bis C22 Alkylrest, einen linearen oder verzweigen, ein- oder mehrfach ungesättigten, gegebenenfalls Heteroatome enthaltenden C1 bis C22 Alkenylrest oder einen gegebenenfalls Heteroatome enthaltenden, gegebenenfalls ein oder mehrfach substituierten C6 bis C18 Arylrest stehen oder Glieder eines gesättigten oder ungesättigten, gegebenenfalls Heteroatome enthaltenden 4 bis 7 gliedrigen Rings oder polycyclischen Systems sein können,
p eine ganze Zahl größer gleich 1, bevorzugt 1, 2 oder 3 ist,
und R9 und R10 in Wiederholungseinheiten (p > 1) jeweils unterschiedlich sein können,
und wobei die Verbindungen der Formel (VI) auch durch Chlor, Brom, Nitrogruppen oder Alkoxygruppen substituiert sein können.

Bevorzugte Verbindungen der Formel (VI) sind Trimethylencarbonat, Neopentylglykolcarbonat (5,5-Dimethyl-1,3-dioxan-2-on), 2,2,4-Trimethyl-1,3-pentandiolcarbonat, 2,2-Dimethyl-1,3-butandiolcarbonat, 1,3-Butandiolcarbonat, 2-Methyl-1,3-propandiolcarbonat, 2,4-Pentandiolcarbonat, 2-Methyl-butan-1,3-diolcarbonat, TMP-Monoallylethercarbonat, Pentaerythritdiallylethercarbonat, 5-(2-Hydroxyethyl)-1,3-dioxan-2-on, 5-[2-(Benzyloxy)ethyl]-1,3-dioxan-2-on, 4-Ethyl-1,3-dioxolan-2-on, 1,3-Dioxolan-2-on, 5-Ethyl-5-methyl-1,3-dioxan-2-on, 5,5-Diethyl-1,3-dioxan-2-on, 5-Methyl-5-propyl-1,3-dioxan-2-on, 5-(Phenylamino)-1,3-dioxan-2-on und 5,5-Dipropyl-1,3-dioxan-2-on. Besonders bevorzugt sind Trimethylencarbonat und Neopentylglykolcarbonat.

Cyclische Carbonate mit weniger als drei gegebenenfalls substituierten Methylengruppen zwischen den Sauerstoffatomen der Carbonatgruppe können ebenfalls als Suspensionsmittel, ggf. gemeinsam mit Suspensionsmitteln der Gruppe bestehend aus polar-aprotischen, schwach polar-aprotischen und unpolar-aprotischen Lösungsmitteln, aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe, aliphatischen cyclischen Anhydriden und aromatischen cyclischen Anhydriden eingesetzt werden. Bevorzugte cyclische Carbonate mit weniger als drei gegebenenfalls substituierten Methylengruppen zwischen den Sauerstoffatomen der Carbonatgruppe sind 4-Methyl-2-oxo-1,3-dioxolan, 1,3-Dioxolan-2-on, 2,3-Butandiolcarbonat, 2,3-Pentandiolcarbonat, 2-Methyl-1,2-propandiolcarbonat, 2,3-Dimethyl-2,3-butandiolcarbonat. Ohne an eine Theorie gebunden zu sein, werden cyclische Carbonate mit weniger als drei gegebenenfalls substituierten Methylengruppen zwischen den Sauerstoffatomen der Carbonatgruppe unter den Bedingungen des erfindungsgemäßen Verfahrens zur Copolymerisation von Epoxiden und $CO_2$ nicht oder nur zu einem geringen Anteil in die Polymerkette eingebaut.

Die erfindungsgemäß erhaltenen Polyetherestercarbonatpolyole haben beispielsweise eine Funktionalität von mindestens 1, bevorzugt von 1 bis 8, besonders bevorzugt von 1 bis 6 und ganz besonders bevorzugt von 2 bis 4. Das Molekulargewicht beträgt bevorzugt 400 bis 10000 g/mol und besonders bevorzugt 500 bis 6000 g/mol.

Allgemein können für das erfindungsgemäße Verfahren **Alkylenoxide** (Epoxide) mit 2-24 Kohlenstoffatomen eingesetzt werden. Bei den Alkylenoxiden mit 2-24 Kohlenstoffatomen handelt es sich beispielsweise um eine oder mehrere Verbindungen ausgewählt aus der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Butadienmonoxid, Isoprenmonoxid, Cyclopentenoxid, Cyclohexenoxid, Cycloheptenoxid, Cyclooctenoxid, Styroloxid, Methylstyroloxid, Pinenoxid, einoder mehrfach epoxidierte Fette als Mono-, Di- und Triglyceride, epoxidierte Fettsäuren, $C_1$-$C_{24}$-Ester von epoxidierten Fettsäuren, Epichlorhydrin, Glycidol, und Derivate des Glycidols wie beispielsweise Methylglycidylether, Ethylglycidylether, 2-Ethylhexylglycidylether, Allylglycidylether, Glycidylmethacrylat sowie epoxidfunktionelle Alkyoxysilane wie beispielsweise 3-Glycidyloxypropyltrimethoxysilan, 3-Glycidyloxypropyltriethoxysilan, 3-Glycidyloxypropyltripropoxysilan, 3-Glycidyloxypropyl-methyl-dimethoxysilan, 3-Glycidyloxypropyl-ethyldiethoxysilan, 3-Glycidyloxypropyltriisopropoxysilan. Vorzugsweise werden als Alkylenoxide Ethylenoxid und/oder Propylenoxid, insbesondere Propylenoxid eingesetzt.

Als **cyclische Anhydride** werden vorzugsweise Verbindungen der Formel (VII), (VIII) oder (IX) eingesetzt,

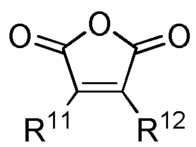

(VII)

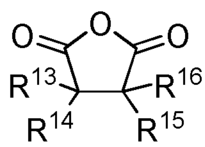

(VIII)

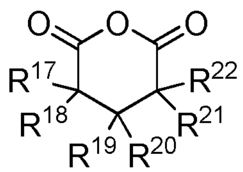

(IX)

wobei

R11 und R12 für Wasserstoff, Halogen, lineare oder verzweigte, gegebenenfalls Heteroatome enthaltende C1-C22-Alkyl, lineare oder verzweigte, gegebenenfalls Heteroatome enthaltende, ein oder mehrfach ungesättigte C1-C22-Alkenyl oder gegebenenfalls Heteroatome enthaltende, gegebenenfalls ein- oder mehrfach substituierte C6-C18-Aryl-Substituenten stehen oder R11 und R12 Glieder eines gesättigten oder ungesättigten, gegebenenfalls Heteroatome enthaltenden 4 bis 7 gliedrigen Rings oder polycyclischen Systems sein können, vorzugsweise R11 und R12 gemeinsam einen Benzolring ergeben,

R13, R14, R15 und R16 für Wasserstoff, lineare oder verzweigte, gegebenenfalls Heteroatome enthaltende C1-C22-Alkyl-, lineare oder verzweigte, gegebenenfalls Heteroatome enthaltende, ein oder mehrfach ungesättigte C1-C22-Alkenyl- oder gegebenenfalls Heteroatome enthaltende, gegebenenfalls ein- oder mehrfach substituierte C6-C18-Aryl-Substituenten stehen oder Glieder eines gesättigten oder ungesättigten, gegebenenfalls Heteroatome enthaltenden 4 bis 7 gliedrigen Rings oder polycyclischen Systems sein können und

R17, R18, R19, R20, R21 und R22 für Wasserstoff, lineare oder verzweigte, gegebenenfalls Heteroatome enthaltende C1-C22-Alkyl-, lineare oder verzweigte, gegebenenfalls Heteroatome enthaltende, ein oder mehrfach ungesättigte C1-C22-Alkenyl- oder gegebenenfalls Heteroatome enthaltende, gegebenenfalls ein- oder mehrfach substituierte C6-C18-Aryl-Substituenten stehen oder Glieder eines gesättigten oder ungesättigten, gegebenenfalls Heteroatome enthaltenden 4 bis 7 gliedrigen Rings oder polycyclischen Systems sein können,

und wobei die Verbindungen der Formel (VII) und (VIII) und (IX) auch durch Chlor, Brom, Nitrogruppen oder Alkoxygruppen substituiert sein können.

Bevorzugte Verbindungen der Formel (VII), (VIII) oder (IX) sind Succinsäureanhydrid, Maleinsäureanhydrid, Phthalsäureanhydrid, 1,2-Cyclohexandicarbonsäureanhydrid, Diphensäureanhydrid, Tetrahydrophthalsäureanhydrid, Methyltetrahydrophthalsäureanhydrid, Norbornendisäureanhydrid und ihre Chlorierungsprodukte, Bernsteinsäureanhydrid, Glutarsäureanhydrid, Diglykolsäureanhydrid, 1,8-Naphthalsäureanhydrid, Bernsteinsäureanhydrid, Dodecenylbernsteinsäureanhydrid, Tetradecenylbernsteinsäureanhydrid, Hexadecenylbernsteinsäureanhydrid, Octadecenylbernsteinsäureanhydrid, 3- und 4-Nitrophthalsäureanhydrid, Tetrachlorphthalsäureanhydrid, Tetrabromphthalsäureanhydrid, Itaconsäureanhydrid, Dimethylmaleinsäureanhydrid, Allylnorbornendisäureanhydrid, 3-Methylfuran-2,5-dion, 3-Methyldihydrofuran-2,5-dion, Dihydro-2H-pyran-2,6(3H)-dion, 1,4-Dioxane-2,6-dion, 2H-Pyran-2,4,6(3H,5H)-trion, 3-Ethyldihydrofuran-2,5-dion, 3-Methoxydihydrofuran-2,5-dion, 3-(Prop-2-en-1-yl)dihydrofuran-2,5-dion, N-(2,5-Dioxotetrahydrofuran-3-yl)formamid und 3[(2E)-But-2-en-1-yl]dihydrofuran-2,5-dion. Besonders bevorzugt sind Succinsäureanhydrid, Maleinsäureanhydrid und Phthalsäureanhydrid.

Als geeignete **H-funktionelle Startersubstanz** ("Starter") können Verbindungen mit für die Alkoxylierung aktiven H-Atomen eingesetzt werden, die eine Molmasse von 18 bis 4500 g/mol, bevorzugt von 62 bis 500 g/mol und besonders bevorzugt von 62 bis 182 g/mol aufweisen. Die Fähigkeit zur Verwendung eines Starters mit einer niedrigen Molmasse ist ein deutlicher Vorteil gegenüber der Verwendung von oligomeren Startern, die mittels einer vorherigen Oxyalkylierung hergestellt sind. Insbesondere wird eine Wirtschaftlichkeit erreicht, die durch das Weglassen eines getrennten Oxyalkylierungsverfahrens ermöglicht wird.

Für die Alkoxylierung aktive Gruppen mit aktiven H-Atomen sind beispielsweise -OH, $-NH_2$ (primäre Amine), -NH- (sekundäre Amine), -SH und $-CO_2H$, bevorzugt sind -OH und $-NH_2$, besonders bevorzugt ist -OH. Als H-funktionelle Startersubstanz wird beispielsweise eine oder mehrere Verbindungen ausgewählt aus der Gruppe bestehend aus ein- oder mehrwertigen Alkoholen, mehrwertigen Aminen, mehrwertigen Thiolen, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, Polyethylenimine, Polyetheramine, Polytetrahydrofurane (z. B. PolyTHF® der BASF), Polytetrahydrofuranamine, Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und $C_1$-$C_{24}$ Alkyl-Fettsäureester, die im Mittel mindestens 2 OH-Gruppen pro Molekül enthalten, eingesetzt. Beispielhaft handelt es sich bei den $C_1$-$C_{24}$ Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol®TM-Typen (Fa. USSC Co.).

Als monofunktionelle Startersubstanzen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propagylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-1-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Startersubstanzen geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentandiol, Methylpentandiole (wie beispielweise 3-Methyl-1,5-pentandiol), 1,6-Hexandiol, 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielsweise Trimethylolpropan, Glycerin, Trishydroxyethylisocyanurat, Rizinusöl); vierwertige Alkohole (wie beispielsweise Pentaerythrit); Polyalkohole (wie beispielsweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvorgenannten Alkohole mit unterschiedlichen Mengen an $\varepsilon$-Caprolacton.

Die H-funktionellen Startersubstanzen können auch aus der Substanzklasse der Polyetherpolyole ausgewählt sein, die ein Molekulargewicht $M_n$ im Bereich von 18 bis 4500 g/mol und eine Funktionalität von 2 bis 3 aufweisen. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende

oder Blockcopolymere aus Ethylenoxid und Propylenoxid handeln.

Die H-funktionellen Startersubstanzen können auch aus der Substanzklasse der Polyesterpolyole ausgewählt sein. Als Polyesterpolyole werden mindestens difunktionelle Polyester eingesetzt. Bevorzugt bestehen Polyesterpolyole aus alternierenden Säure- und Alkoholeinheiten. Als Säurekomponenten werden z. B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydriden eingesetzt. Als Alkoholkomponenten werden z. B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole, die ebenfalls als Startersubstanzen zur Herstellung der Polyetherestercarbonatpolyole dienen können.

Des Weiteren können als H-funktionelle Startersubstanzen Polycarbonatdiole eingesetzt werden, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z. B. in der EP-A 1359177.

In einer weiteren Ausführungsform der Erfindung können Polyetherestercarbonatpolyole als H-funktionelle Startersubstanzen eingesetzt werden. Insbesondere werden Polyetherestercarbonatpolyole, die nach dem hier beschriebenen erfindungsgemäßen Verfahren erhältlich sind, eingesetzt. Diese als H-funktionelle Startersubstanzen eingesetzten Polyetherestercarbonatpolyole werden hierzu in einem separaten Reaktionsschritt zuvor hergestellt.

Die H-funktionellen Startersubstanzen weisen im Allgemeinen eine Funktionalität (d.h. Anzahl an für die Polymerisation aktiven H-Atomen pro Molekül) von 1 bis 8, bevorzugt von 2 oder 3 auf. Die H-funktionellen Startersubstanzen werden entweder einzeln oder als Gemisch aus mindestens zwei H-funktionellen Startersubstanzen eingesetzt.

Besonders bevorzugt handelt es sich bei den H-funktionellen Startersubstanzen um eine oder mehrere Verbindungen ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, Pentaerythrit, Sorbitol und Polyetherpolyole mit einem Molekulargewicht Mn im Bereich von 150 bis 4500 g/mol und einer Funktionalität von 2 bis 3.

Die Herstellung der Polyetherestercarbonatpolyole erfolgt durch katalytische Anlagerung von Kohlendioxid und Alkylenoxiden an H-funktionelle Startersubstanzen. Unter "H-funktionell" wird im Sinne der Erfindung die Anzahl an für die Alkoxylierung aktiven H-Atomen pro Molekül der Startersubstanz verstanden.

DMC-Katalysatoren zur Verwendung in der Homopolymerisation von Alkylenoxiden sind im Prinzip aus dem Stand der Technik bekannt (siehe z.B. US-A 3 404 109, US-A 3 829 505, US-A 3 941 849 und US-A 5 158 922). DMC-Katalysatoren, die z.B. in US-A 5 470 813, EP-A 700 949, EP-A 743 093, EP-A 761 708, WO 97/40086, WO 98/16310 und WO 00/47649 beschrieben sind, besitzen eine sehr hohe Aktivität und ermöglichen die Herstellung von Polyetherestercarbonatpolyolen bei sehr geringen Katalysatorkonzentrationen, so dass eine Abtrennung des Katalysators aus dem fertigen Produkt i.a. nicht mehr erforderlich ist. Ein typisches Beispiel sind die in EP-A 700 949 beschriebenen hochaktiven DMC-Katalysatoren, die neben einer Doppelmetallcyanid-Verbindung (z.B. Zinkhexacyanocobaltat(III)) und einem organischen Komplexliganden (z.B. tert.-Butanol) noch einen Polyether mit einem zahlenmittlerem Molekulargewicht größer als 500 g/mol enthalten.

Die erfindungsgemäßen DMC-Katalysatoren werden vorzugsweise erhalten, indem man

(i) im ersten Schritt eine wässrige Lösung eines Metallsalzes mit der wässrigen Lösung eines Metallcyanidsalzes in Gegenwart eines oder mehrerer organischen Komplexliganden, z.B. eines Ethers oder Alkohols, umsetzt,

(ii) wobei im zweiten Schritt der Feststoff aus der aus (i) erhaltenen Suspension durch bekannte Techniken (wie Zentrifugation oder Filtration) abgetrennt wird,

(iii) wobei gegebenenfalls in einem dritten Schritt der isolierte Feststoff mit einer wässrigen Lösung eines organischen Komplexliganden gewaschen wird (z.B. durch Resuspendieren und anschließende erneute Isolierung durch Filtration oder Zentrifugation),

(iv) wobei anschließend der erhaltene Feststoff, gegebenenfalls nach Pulverisierung, bei Temperaturen von im Allgemeinen 20 - 120°C und bei Drücken von im Allgemeinen 0,1 mbar bis Normaldruck (1013 mbar) getrocknet wird,

und wobei im ersten Schritt oder unmittelbar nach der Ausfällung der Doppelmetallcyanidverbindung (zweiter Schritt) ein oder mehrere organische Komplexliganden, vorzugsweise im Überschuss (bezogen auf die Doppelmetallcyanidverbindung) und gegebenenfalls weitere komplexbildende Komponenten zugesetzt werden.

Die in den erfindungsgemäßen DMC-Katalysatoren enthaltenen Doppelmetallcyanid-Verbindungen sind die Reaktionsprodukte wasserlöslicher Metallsalze und wasserlöslicher Metallcyanidsalze.

Beispielsweise werden eine wässrige Lösung von Zinkchlorid (bevorzugt im Überschuss bezogen auf das Metallcyanidsalz wie beispielsweise Kaliumhexacyanocobaltat) und Kaliumhexacyanocobaltat gemischt und anschließend Dimethoxyethan (Glyme) oder *tert*-Butanol (vorzugsweise im Überschuss, bezogen auf Zinkhexacyanocobaltat) zur gebildeten Suspension gegeben.

Zur Herstellung der Doppelmetallcyanid-Verbindungen geeignete Metallsalze besitzen bevorzugt die allgemeine Formel (X),

$$M(X)_n \qquad (X)$$

wobei

M ausgewählt ist aus den Metallkationen $Zn^{2+}$, $Fe^{2+}$, $Ni^{2+}$, $Mn^{2+}$, $Co^{2+}$, $Sr^{2+}$, $Sn^{2+}$, $Pb^{2+}$ und, $Cu^{2+}$, bevorzugt ist M $Zn^{2+}$, $Fe^{2+}$, $Co^{2+}$ oder $Ni^{2+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
n ist 1, wenn X = Sulfat, Carbonat oder Oxalat ist und
n ist 2, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (XI),

$$M_r(X)_3 \qquad (XI)$$

wobei

M ausgewählt ist aus den Metallkationen $Fe^{3+}$, $Al^{3+}$, $Co^{3+}$ und $Cr^{3+}$,
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
r ist 2, wenn X = Sulfat, Carbonat oder Oxalat ist und
r ist 1, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (XII),

$$M(X)_s \qquad (XII)$$

wobei

M ausgewählt ist aus den Metallkationen $Mo^{4+}$, $V^{4+}$ und $W^{4+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
s ist 2, wenn X = Sulfat, Carbonat oder Oxalat ist und
s ist 4, wenn X = Halogenid, Hydroxid, Carboxylat, Cyanat, Thiocyanat, Isocyanat, Isothiocyanat oder Nitrat ist,

oder geeignete Metallsalze besitzen die allgemeine Formel (XIII),

$$M(X)t \qquad (XIII)$$

wobei

M ausgewählt ist aus den Metallkationen $Mo^{6+}$ und $W^{6+}$
X sind ein oder mehrere (d.h. verschiedene) Anionen, vorzugsweise ein Anion ausgewählt aus der Gruppe der Halogenide (d.h. Fluorid, Chlorid, Bromid, Iodid), Hydroxid, Sulfat, Carbonat, Cyanat, Thiocyanat, Isocyanat, Isothiocyanat, Carboxylat, Oxalat und Nitrat;
t ist 3, wenn X = Sulfat, Carbonat oder Oxalat ist und
t ist 6, wenn X = Halogenid, Hydroxid, Carboxylat, Cyanat, Thiocyanat, Isocyanat, Isothiocyanat oder Nitrat ist,

Beispiele geeigneter Metallsalze sind Zinkchlorid, Zinkbromid, Zinkjodid, Zinkacetat, Zinkacetylacetonat, Zinkbenzoat, Zinknitrat, Eisen(II)sulfat, Eisen(II)bromid, Eisen(II)chlorid, Eisen(III)chlorid, Cobalt(II)chlorid, Cobalt(II)thiocyanat, Nickel(II)chlorid und Nickel(II)nitrat. Es können auch Mischungen verschiedener Metallsalze eingesetzt werden.

Zur Herstellung der Doppelmetallcyanid-Verbindungen geeignete Metallcyanidsalze besitzen bevorzugt die allgemeine Formel (XIV)

$$(Y)_aM'(CN)_b(A)_c \qquad (XIV)$$

wobei

M' ausgewählt ist aus einem oder mehreren Metallkationen der Gruppe bestehend aus Fe(II), Fe(III), Co(II), Co(III), Cr(II), Cr(III), Mn(II), Mn(III), Ir(III), Ni(II), Rh(III), Ru(II), V(IV) und V(V), bevorzugt ist M' ein oder mehrere Metallkationen der Gruppe bestehend aus Co(II), Co(III), Fe(II), Fe(III), Cr(III), Ir(III) und Ni(II),

Y ausgewählt ist aus einem oder mehreren Metallkationen der Gruppe bestehend aus Alkalimetall (d.h. $Li^+$, $Na^+$, $K^+$, $Rb^+$) und Erdalkalimetall (d.h. $Be^{2+}$, $Mg^{2+}$, $Ca^{2+}$, $Sr^{2+}$, $Ba^{2+}$),

A ausgewählt ist aus einem oder mehreren Anionen der Gruppe bestehend aus Halogenide (d.h. Fluorid, Chlorid, Bromid, Iodid), Hydroxid, Sulfat, Carbonat, Cyanat, Thiocyanat, Isocyanat, Isothiocyanat, Carboxylat, Azid, Oxalat oder Nitrat und

a, b und c ganzzahlige Zahlen sind, wobei die Werte für a, b und c so gewählt sind, dass die Elektroneutralität des Metallcyanidsalzes gegeben ist; a ist vorzugsweise 1, 2, 3 oder 4; b ist vorzugsweise 4, 5 oder 6; c besitzt bevorzugt den Wert 0.

Beispiele geeigneter Metallcyanidsalze sind Natriumhexacyanocobaltat(III), Kaliumhexacyanocobaltat(III), Kaliumhexacyanoferrat(II), Kaliumhexacyanoferrat(III), Calcium-hexacyanocobaltat(III) und Lithiumhexacyanocobaltat(III).

Bevorzugte Doppelmetallcyanid-Verbindungen, die in den erfindungsgemäßen DMC-Katalysatoren enthalten sind, sind Verbindungen der allgemeinen Formel (XV)

$$M_x[M'_{x'},(CN)_y]_z \qquad (XV)$$

worin M wie in Formel (X) bis (XIII) und

M' wie in Formel (XIV) definiert ist, und

x, x', y und z sind ganzzahlig und so gewählt, dass die Elektronenneutralität der Doppelmetallcyanidverbindung gegeben ist.

Vorzugsweise ist

x = 3, x' = 1, y = 6 und z = 2,

M = Zn(II), Fe(II), Co(II) oder Ni(II) und

M' = Co(III), Fe(III), Cr(III) oder Ir(III).

Beispiele geeigneter Doppelmetallcyanidverbindungen a) sind Zinkhexacyanocobaltat(III), Zink-hexacyanoiridat(III), Zinkhexacyanoferrat(III) und Cobalt(II)hexacyanocobaltat(III). Weitere Beispiele geeigneter Doppelmetallcyanid-Verbindungen sind z.B. US 5 158 922 (Spalte 8, Zeilen 29 - 66) zu entnehmen. Besonders bevorzugt verwendet wird Zinkhexacyanocobaltat(III).

Die bei der Herstellung der DMC-Katalysatoren zugesetzten organischen Komplexliganden sind beispielsweise in US 5 158 922 (siehe insbesondere Spalte 6, Zeilen 9 bis 65), US 3 404 109, US 3 829 505, US 3 941 849, EP-A 700 949, EP-A 761 708, JP 4 145 123, US 5 470 813, EP-A 743 093 und WO-A 97/40086) offenbart. Beispielsweise werden als organische Komplexliganden wasserlösliche, organische Verbindungen mit Heteroatomen, wie Sauerstoff, Stickstoff, Phosphor oder Schwefel, die mit der Doppelmetallcyanid-Verbindung Komplexe bilden können, eingesetzt. Bevorzugte organische Komplexliganden sind Alkohole, Aldehyde, Ketone, Ether, Ester, Amide, Harnstoffe, Nitrile, Sulfide und deren Mischungen. Besonders bevorzugte organische Komplexliganden sind aliphatische Ether (wie Dimethoxyethan), wasserlösliche aliphatische Alkohole (wie Ethanol, Isopropanol, n-Butanol, iso-Butanol, sek.-Butanol, tert-Butanol, 2-Methyl-3-buten-2-ol und 2-Methyl-3-butin-2-ol), Verbindungen, die sowohl aliphatische oder cycloaliphatische Ethergruppen wie auch aliphatische Hydroxylgruppen enthalten (wie z.B. Ethylenglykol-mono-tert.-butylether, Diethylenglykol-mono-tert.-butylether, Tripropylenglykol-mono-methylether und 3-Methyl-3-oxetan-methanol). Höchst bevorzugte organische Komplexliganden sind ausgewählt aus einer oder mehrerer Verbindungen der Gruppe bestehend aus Dimethoxyethan, tert-Butanol 2-Methyl-3-buten-2-ol, 2-Methyl-3-butin-2-ol, Ethylenglykol-mono-tert.-butylether und 3-Methyl-3-oxetan-methanol.

Optional werden bei der Herstellung der erfindungsgemäßen DMC-Katalysatoren eine oder mehrere komplexbildende Komponente(n) aus den Verbindungsklassen der Polyether, Polyester, Polycarbonate, Polyalkylenglykolsorbitanester, Polyalkylenglykolglycidylether, Polyacrylamid, Poly(acrylamid-co-acrylsäure), Polyacrylsäure, Poly(acrylsäure-co-maleinsäure), Polyacrylnitril, Polyalkylacrylate, Polyalkyhnethacrylate, Polyvinylmethylether, Polyvinylethylether, Polyvinylacetat, Polyvinylalkohol, Poly-N-vinylpyrrolidon, Poly(N-vinylpyrrolidon-co-acrylsäure), Polyvinylmethylketon, Poly(4-vinylphenol), Poly(acrylsäure-co-styrol), Oxazolinpolymere, Polyalkylenimine, Maleinsäure- und Maleinsäureanhydridcopolymere, Hydroxyethylcellulose und Polyacetale, oder der Glycidylether, Glycoside, Carbonsäureester mehrwertiger Alkohole, Gallensäuren oder deren Salze, Ester oder Amide, Cyclodextrine, Phosphorverbindungen, α,β-ungesättigten Carbonsäureester oder ionische oberflächen- bzw. grenzflächenaktiven Verbindungen eingesetzt.

Bevorzugt werden bei der Herstellung der erfindungsgemäßen DMC-Katalysatoren im ersten Schritt die wässrigen Lösungen des Metallsalzes (z.B. Zinkchlorid), eingesetzt im stöchiometrischen Überschuss (mindestens 50 Mol-%) bezogen auf Metallcyanidsalz (also mindestens ein molares Verhältnis von Metallsalz zu Metallcyanidsalz von 2,25 zu 1,00) und des Metallcyanidsalzes (z.B. Kaliumhexacyanocobaltat) in Gegenwart des organischen Komplexliganden (z.B. tert.-Butanol) umgesetzt, wobei sich eine Suspension bildet, die die Doppelmetallcyanid-Verbindung (z.B. Zinkhexacyanocobaltat), Wasser, überschüssiges Metallsalz, und den organischen Komplexliganden enthält.

Der organische Komplexligand kann dabei in der wässrigen Lösung des Metallsalzes und/oder des Metallcyanidsalzes vorhanden sein, oder er wird der nach Ausfällung der Doppelmetallcyanid-Verbindung erhaltenen Suspension unmittelbar zugegeben. Es hat sich als vorteilhaft erwiesen, die wässrigen Lösungen des Metallsalzes und des Metallcyanidsalzes, und den organischen Komplexliganden unter starkem Rühren zu vermischen. Optional wird die im ersten Schritt gebildete Suspension anschließend mit einer weiteren komplexbildenden Komponente behandelt. Die komplexbildende Komponente wird dabei bevorzugt in einer Mischung mit Wasser und organischem Komplexliganden eingesetzt. Ein bevorzugtes Verfahren zur Durchführung des ersten Schrittes (d.h. der Herstellung der Suspension) erfolgt unter Einsatz einer Mischdüse, besonders bevorzugt unter Einsatz eines Strahldispergators wie in WO-A 01/39883 beschrieben.

Im zweiten Schritt erfolgt die Isolierung des Feststoffs (d.h. die Vorstufe des erfindungsgemäßen Katalysators) aus der Suspension durch bekannte Techniken, wie Zentrifugation oder Filtration.

In einer bevorzugten Ausführungsvariante wird der isolierte Feststoff anschließend in einem dritten Verfahrensschritt mit einer wässrigen Lösung des organischen Komplexliganden gewaschen (z.B. durch Resuspendieren und anschließende erneute Isolierung durch Filtration oder Zentrifugation). Auf diese Weise können zum Beispiel wasserlösliche Nebenprodukte, wie Kaliumchlorid, aus dem erfindungsgemäßen Katalysator entfernt werden. Bevorzugt liegt die Menge des organischen Komplexliganden in der wässrigen Waschlösung zwischen 40 und 80 Gew.-%, bezogen auf die Gesamtlösung.

Optional wird im dritten Schritt der wässrigen Waschlösung weitere komplexbildende Komponente, bevorzugt im Bereich zwischen 0,5 und 5 Gew.-%, bezogen auf die Gesamtlösung, zugefügt.

Außerdem ist es vorteilhaft, den isolierten Feststoff mehr als einmal zu waschen. Vorzugsweise wird in einem ersten Waschschritt (iii-1) mit einer wässrigen Lösung des ungesättigten Alkohols gewaschen (z.B. durch Resuspendieren und anschließende erneute Isolierung durch Filtration oder Zentrifugation), um auf diese Weise zum Beispiel wasserlösliche Nebenprodukte, wie Kaliumchlorid, aus dem erfindungsgemäßen Katalysator zu entfernen. Besonders bevorzugt liegt die Menge des ungesättigten Alkohols in der wässrigen Waschlösung zwischen 40 und 80 Gew.-%, bezogen auf die Gesamtlösung des ersten Waschschritts. In den weiteren Waschschritten (iii-2) wird entweder der erste Waschschritt einmal oder mehrmals, vorzugsweise einmal bis dreimal wiederholt, oder vorzugsweise wird eine nichtwässrige Lösung, wie z.B. eine Mischung oder Lösung aus ungesättigtem Alkohol und weiterer komplexbildender Komponente (bevorzugt im Bereich zwischen 0,5 und 5 Gew.-%, bezogen auf die Gesamtmenge der Waschlösung des Schrittes (iii-2)), als Waschlösung eingesetzt und der Feststoff damit einmal oder mehrmals, vorzugsweise einmal bis dreimal gewaschen.

Der isolierte und gegebenenfalls gewaschene Feststoff wird anschließend, gegebenenfalls nach Pulverisierung, bei Temperaturen von im Allgemeinen 20 - 100°C und bei Drücken von im Allgemeinen 0,1 mbar bis Normaldruck (1013 mbar) getrocknet.

Ein bevorzugtes Verfahren zur Isolierung der erfindungsgemäßen DMC-Katalysatoren aus der Suspension durch Filtration, Filterkuchenwäsche und Trocknung wird in WO-A 01/80994 beschrieben.

Ein weiterer Gegenstand der vorliegenden Erfindung ist ein Polyetherestercarbonatpolyol, welches nach dem erfindungsgemäßen Verfahren erhältlich ist.

Die nach dem erfindungsgemäßen Verfahren erhältlichen Polyetherestercarbonatpolyole weisen einen geringen Gehalt an Nebenprodukten auf und können problemlos verarbeitet werden, insbesondere durch Umsetzung mit Di- und/oder Polyisocyanaten zu Polyurethanen, insbesondere Polyurethan-Weichschaumstoffen wie beispielsweise Polyurethan-Weichblockschaumstoffen und Polyurethan-Weichformschaumstoffen. Für Polyurethananwendungen werden vorzugsweise Polyetherestercarbonatpolyole eingesetzt, die auf einer H-funktionellen Startersubstanz basieren, welche eine Funktionalität von mindestens 2 besitzt. Des Weiteren können die nach dem erfindungsgemäßen Verfahren erhältlichen Polyetherestercarbonatpolyole in Anwendungen wie Wasch- und Reinigungsmittelformulierungen, Bohrflüssigkeiten, Kraftstoffadditiven, ionischen und nicht-ionischen Tensiden, Schmiermitteln, Prozesschemikalien für die Papier- oder Textilherstellung oder kosmetischen Formulierungen verwendet werden. Dem Fachmann ist bekannt, dass

abhängig vom jeweiligen Anwendungsgebiet die zu verwendenden Polyetherestercarbonatpolyole gewisse Stoffeigenschaften wie beispielsweise Molekulargewicht, Viskosität, Funktionalität und/oder Hydroxylzahl erfüllen müssen.

Die Erfindung wird im Folgenden anhand von Beispielen näher erörtert.

## Beispiele

Einsatzstoffe:

*H-funktionelle Starterverbindungen*

DPG: Dipropylenglycol

*Epoxide*

PO: Propylenoxid

*Anhydride*

MA: Maleinsäureanhydrid

*Suspensionsmittel*

cPC: cyclisches Propylencarbonat

*Katalysator*

Als DMC-Katalysator wurde bei allen Beispielen DMC-Katalysator hergestellt gemäß Beispiel 6 in WO 01/80994 A1 eingesetzt.

Methoden:

Die Polymerisationsreaktionen wurden in einem 300 ml Druckreaktor der Fa. Parr durchgeführt. Der in den Beispielen eingesetzte Druckreaktor hatte eine Höhe (innen) von 10,16 cm und einen Innendurchmesser von 6,35 cm. Der Reaktor war ausgestattet mit einem elektrischen Heizmantel (510 Watt maximale Heizleistung). Die Gegenkühlung bestand in einem U-förmig gebogenen Tauchrohr mit 6 mm Außendurchmesser, das bis 5 mm über den Boden in den Reaktor ragte und das mit Kühlwasser von ca. 10°C durchströmt wurde. Der Wasserstrom wurde über ein Magnetventil ein- und ausgeschaltet. Weiterhin war der Reaktor mit einem Einleitrohr sowie einem Thermofühler mit 1,6 mm Durchmesser ausgestattet, die bis 3 mm über den Boden in den Reaktor ragten.

Bei dem in den Beispielen eingesetzten Gaseintragsrührer handelte es sich um einen Hohlwellenrührer, bei dem das Gas über eine hohle Welle des Rührers in die Reaktionsmischung eingeleitet wurde. Der auf der Hohlwelle angebrachte Rührkörper wies vier Arme auf, hatte einen Durchmesser von 35 mm und eine Höhe von 14 mm. An jedem Ende des Arms waren zwei Gasauslässe angebracht, die einen Durchmesser von 3 mm aufwiesen. Durch die Drehung des Rührers entstand ein Unterdruck derart, dass das über der Reaktionsmischung befindliche Gas ($CO_2$ und ggf. Alkylenoxid) abgesaugt wurde und über die Hohlwelle des Rührers in die Reaktionsmischung eingeleitet wurde. Die Bezeichnung rpm bezieht sich auf die Anzahl der Umdrehungen des Rührers pro Minute.

a) Bei der Terpolymerisation von Propylenoxid, Anhydriden und $CO_2$ resultierte neben dem cyclischen Propylencarbonat das Polyetherestercarbonatpolyol, welches einerseits in Formel (XVIa) gezeigte Polycarbonat-Einheiten enthält,

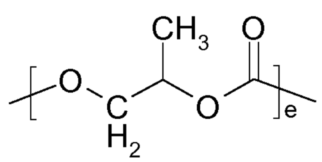

bzw.

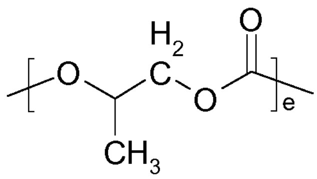

(XVIa)

und andererseits in Formel (XVIb) gezeigte Polyether-Einheiten enthält.

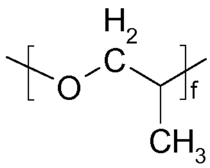

bzw.

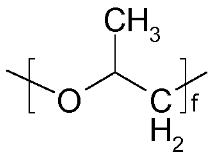

(XVIb)

Die Charakterisierung des Reaktionsgemisches erfolgte durch $^1$H-NMR Spektroskopie.

Das Verhältnis der Menge an cyclischem Propylencarbonat zu Polyetherestercarbonatpolyol (Selektivität; Verhältnis g/e) sowie der Anteil der nicht umgesetzten Monomere (Propylenoxid $R_{PO}$, Maleinsäureanhydrid $R_{MA}$ in mol%) wurden mittels $^1$H-NMR Spektroskopie bestimmt. Dazu wurde jeweils eine Probe der nach der Reaktion erhaltenen Reaktionsmischung in deuteriertem Chloroform gelöst und auf einem Spektrometer der Firma Bruker (AV400, 400 MHz) vermessen.

Anschließend wurde die Reaktionsmischung mit Dichlormethan (20 ml) verdünnt und die Lösung durch einen Fallfilmverdampfer geleitet. Die Lösung (0,1 kg in 3 h) lief entlang der inneren Wand eines von außen auf 120°C beheizten Rohres mit 70 mm Durchmesser und 200 mm Länge herab, wobei die Reaktionsmischung durch drei mit einer Geschwindigkeit von 250 U/min rotierende Rollen mit 10 mm Durchmesser jeweils gleichmäßig als dünner Film auf der inneren Wand des Fallfilmverdampfers verteilt wurde. Im Inneren des Rohres wurde über eine Pumpe ein Druck von 3 mbar eingestellt. Die von leicht flüchtigen Bestandteilen (nicht umgesetzte Epoxide, cyclisches Carbonat, Lösungsmittel) gereinigte Reaktionsmischung wurde am unteren Ende des beheizten Rohres in einer Vorlage aufgefangen.

Das molare Verhältnis von Carbonatgruppen zu Ethergruppen im Polyetherestercarbonatpolyol (Verhältnis e/f) sowie der molare Anteil von in das Polymer eingebautem Anhydrid wurden mittels $^1$H-NMR Spektroskopie bestimmt. Eine Probe der gereinigten Reaktionsmischung wurde dazu jeweils in deuteriertem Chloroform gelöst und auf einem Spektrometer der Firma Bruker (AV400, 400 MHz) vermessen.

Die relevanten Resonanzen im $^1$H-NMR Spektrum (bezogen auf TMS = 0 ppm), die zur Integration verwendet wurden, sind wie folgt:

I1: 1,10 - 1,17 ppm: Methylgruppe der Polyether-Einheiten, Fläche der Resonanz entspricht drei H Atomen,
I2: 1,25 - 1,34 ppm: Methylgruppe der Polycarbonat-Einheiten, Fläche der Resonanz entspricht drei H Atomen,
I3: 1,45 - 1,48 ppm: Methylgruppe des cyclischen Carbonats, Fläche der Resonanz entspricht drei H Atomen,
I4: 2,95 - 3,00 ppm: CH Gruppe für freies, nicht abreagiertes Propylenoxid, Fläche der Resonanz entspricht einem H Atom,
I5: 6,22-6,29 ppm: CH Gruppe der in das Polymer über den Einbau von Maleinsäureanhydrid erhaltenen Doppelbindung, Fläche der Resonanz entspricht zwei H Atomen,
I6: 7,05 ppm: CH Gruppe für freies, nicht abreagiertes Maleinsäureanhydrid, Fläche der Resonanz entspricht zwei H Atomen.

Angegeben sind das molare Verhältnis der Menge an cyclischem Propylencarbonat zu Carbonat-Einheiten im

Polyetherestercarbonatpolyol (Selektivität g/e) und das molare Verhältnis von Carbonatgruppen zu Ethergruppen im Polyetherestercarbonatpolyol (e/f) sowie die Anteile des nicht umgesetzten Propylenoxids (in mol%) und Maleinsäureanhydrids (in mol%).

Unter Berücksichtigung der relativen Intensitäten wurden die Werte wie folgt berechnet:

Molares Verhältnis der Menge an cyclischem Propylencarbonat zu Carbonat-Einheiten im Polyetherestercarbonatpolyol (Selektivität g/e):

$$g/e = I3 / I2 \qquad \text{(XIII)}$$

Molares Verhältnis von Carbonatgruppen zu Ethergruppen im Polyetherestercarbonatpolyol (e/f):

$$e/f = I2 / I1 \qquad \text{(XIV)}$$

Der Anteil an Carbonateinheiten in den Wiederholungseinheiten des Polyetherestercarbonatpolyols:

$$A_{Carbonat} = [(I2/3) / ((I1/3)+(I2/3)+(I5/2)))] \times 100\% \qquad \text{(XV)}$$

Der Anteil der über den Einbau des Maleinsäureanhydrids resultierenden Doppelbindungen in den Wiederholungseinheiten des Polyetherestercarbonatpolyols:

$$A_{Doppelbindung} = [(I5/2) / ((I1/3)+(I2/3)+(I5/2)))] \times 100\% \qquad \text{(XVI)}$$

Der molare Anteil des nicht umgesetzten Propylenoxids ($R_{PO}$ in mol%) bezogen auf die Summe der bei der Aktivierung und der Copolymerisation eingesetzten Menge an Propylenoxid, berechnet sich nach der Formel:

$$R_{PO} = [I4 / ((I1/3)+(I2/3)+(I3/3)+I4))] \times 100\% \qquad \text{(XVII)}$$

Der molare Anteil des nicht umgesetzten Maleinsäureanhydrids ($R_{MA}$ in mol%) bezogen auf die Summe der bei der Aktivierung und der Copolymerisation eingesetzten Menge an Maleinsäureanhydrid, berechnet sich nach der Formel:

$$R_{MA} = [I6 / (I5 + I6)] \times 100\% \qquad \text{(XVIII)}$$

Die OH-Zahl (Hydroxylzahl) wurde gemäß DIN 53240-2 bestimmt.

Das Zahlenmittel $M_n$ und das Gewichtsmittel $M_w$ des Molekulargewichts der entstandenen Polyethercarbonatpolyole wurde mittels Gelpermeationschromatographie (GPC) bestimmt. Es wurde nach DIN 55672-1: "Gelpermeationschromatographie, Teil 1 - Tetrahydrofuran als Elutionsmittel" vorgegangen (SECurity GPC-System von PSS Polymer Service, Flussrate 1.0 ml/min; Säulen: 2×PSS SDV linear M, 8×300 mm, 5 μm; RID-Detektor). Dabei wurden Polystyrolproben bekannter Molmasse zur Kalibrierung verwendet. Die Polydispersität wurde als das Verhältnis $M_w/M_n$ berechnet.

**Beispiel 1: Herstellung eines Polyetherestercarbonatpolyols unter Zugabe von Maleinsäureanhydrid in Schritt β und γ**

Schritt α:

In einem 300 ml Druckreaktor ausgestattet mit einem Gaseintragsrührer wurde eine Mischung aus DMC-Katalysator (22,5 mg) und cyclischem Propylencarbonat (30 g) vorgelegt und 30 min bei 110°C in einem partiellen Vakuum (50 mbar) unter Durchleiten von Argon durch die Reaktionsmischung gerührt (800 rpm).

Schritt β:

Die Suspension wurde dann auf 130 °C aufgeheizt und mit 15 bar $CO_2$ beaufschlagt, wobei ein leichter Temperaturabfall zu beobachten war. Nach Wiedererreichen einer Temperatur von 130°C wurden 3,0 g einer Monomermischung (5 Gew.-% Maleinsäureanhydrid gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 3,0 g der Monomermischung wurde ein zweites und drittes Mal wiederholt.

Schritt γ:

Die Temperatur wurde auf 110°C nachgeregelt und während der nachfolgenden Schritte der Druck im Druckreaktor durch Nachdosieren von $CO_2$ mit Hilfe eines Massenflußreglers bei 15 bar gehalten. Es wurden unter Rühren weitere 60,2 g einer Monomermischung (5 Gew.-% Maleinsäureanhydrid gelöst in Propylenoxid) über eine HPLC-Pumpe (1 mL/min) zudosiert, wobei die Reaktionsmischung weiterhin gerührt wurde (800 U/min). Zehn Minuten nach Beginn der Zugabe von der Monomermischung wurden unter Rühren 2,4 g Dipropylenglycol über eine separate HPLC-Pumpe (0,05 mL/min) zudosiert. Nach Ende der Zugabe von Propylenoxid wurde die Reaktionsmischung noch weitere 30 min bei 110°C gerührt. Durch Abkühlen des Druckreaktors im Eisbad wurde die Reaktion beendet, der Überdruck abgelassen und das resultierende Produkt analysiert. Der im Polyetherestercarbonatpolyol eingebaute $CO_2$-Anteil, das Verhältnis an Carbonat- zu Ethereinheiten, das erhaltene Molekulargewicht, der Polydispersionsindex (PDI) und die OH-Zahl sind in Tabelle 1 angegeben.

**Beispiel 2: Herstellung eines Polyetherestercarbonatpolyols unter Zugabe von Maleinsäureanhydrid in Schritt γ**

Schritt α:

In einem 300 ml Druckreaktor ausgestattet mit einem Gaseintragsrührer wurde eine Mischung aus DMC-Katalysator (22,5 mg) und cyclischem Propylencarbonat (30 g) vorgelegt und 30 min bei 110°C in einem partiellen Vakuum (50 mbar) unter Durchleiten von Argon durch die Reaktionsmischung gerührt (800 rpm).

Schritt β:

Die Suspension wurde dann auf 130 °C aufgeheizt und mit 15 bar $CO_2$ beaufschlagt, wobei ein leichter Temperaturabfall zu beobachten war, und Wiedererreichen einer Temperatur von 130°C wurden 3,0 g Propylenoxid mit Hilfe einer HPLC-Pumpe (1 ml/min) zudosiert. Die Reaktionsmischung wurde 20 min bei 130°C gerührt (800 rpm). Die Zugabe von 3,0 g Propylenoxid wurde ein zweites und drittes Mal wiederholt.

Schritt γ:

Die Temperatur wurde auf 110°C nachgeregelt und während der nachfolgenden Schritte der Druck im Druckreaktor durch Nachdosieren von $CO_2$ mit Hilfe eines Massenflußreglers bei 15 bar gehalten. Es wurden unter Rühren weitere 60,2 g einer Monomermischung (5 Gew.-% Maleinsäureanhydrid gelöst in Propylenoxid) über eine HPLC-Pumpe (1 mL/min) zudosiert, wobei die Reaktionsmischung weiterhin gerührt wurde (800 U/min). Zehn Minuten nach Beginn der Zugabe von der Monomermischung wurden unter Rühren 2,4 g Dipropylenglycol über eine separate HPLC-Pumpe (0,05 mL/min) zudosiert. Nach Ende der Zugabe von Propylenoxid wurde die Reaktionsmischung noch weitere 30 min bei 110°C gerührt. Durch Abkühlen des Druckreaktors im Eisbad wurde die Reaktion beendet, der Überdruck abgelassen und das resultierende Produkt analysiert. Der im Polyetherestercarbonatpolyol eingebaute $CO_2$-Anteil, das Verhältnis an Carbonat- zu Ethereinheiten, das erhaltene Molekulargewicht, der Polydispersionsindex (PDI) und die OH-Zahl sind in Tabelle 1 angegeben.

**Beispiel 3 (Vgl.): Herstellung eines Polyetherestercarbonatpolyols unter Zugabe von Maleinsäureanhydrid in Schritt β**

Schritt α:

In einem 300 ml Druckreaktor ausgestattet mit einem Gaseintragsrührer wurde eine Mischung aus DMC-Katalysator (22,5 mg) und cyclischem Propylencarbonat (30 g) vorgelegt und 30 min bei 110°C in einem partiellen Vakuum (50 mbar) unter Durchleiten von Argon durch die Reaktionsmischung gerührt (800 rpm).

Schritt β:

Die Suspension wurde dann auf 130 °C aufgeheizt und mit 15 bar $CO_2$ beaufschlagt, wobei ein leichter Temperaturabfall zu beobachten war. Nach Wiedererreichen einer Temperatur von 130°C wurden 3,0 g einer Monomermischung (5 Gew.-% Maleinsäureanhydrid gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 3,0 g der Monomermischung wurde ein zweites und drittes Mal wiederholt.

Schritt γ:

Die Temperatur wurde auf 110°C nachgeregelt und während der nachfolgenden Schritte der Druck im Druckreaktor durch Nachdosieren von $CO_2$ mit Hilfe eines Massenflußreglers bei 15 bar gehalten. Es wurden unter Rühren weitere 60,2 g Propylenoxid über eine HPLC-Pumpe (1 mL/min) zudosiert, wobei die Reaktionsmischung weiterhin gerührt wurde (800 U/min). Zehn Minuten nach Beginn der Zugabe von Propylenoxid wurden unter Rühren 2,4 g Dipropylenglycol über eine separate HPLC-Pumpe (0,05 mL/min) zudosiert. Nach Ende der Zugabe von Propylenoxid wurde die Reaktionsmischung noch weitere 30 min bei 110°C gerührt. Durch Abkühlen des Druckreaktors im Eisbad wurde die Reaktion beendet, der Überdruck abgelassen und das resultierende Produkt analysiert. Der im Polyetherestercarbonatpolyol eingebaute $CO_2$-Anteil, das Verhältnis an Carbonat- zu Ethereinheiten, das erhaltene Molekulargewicht, der Polydispersionsindex (PDI) und die OH-Zahl sind in Tabelle 1 angegeben.

**Beispiel 4 (Vergleich): Herstellung eines Polyetherestercarbonatpolyols unter Zugabe von Maleinsäureanhydrid in Schritt a**

Schritt α:

In einem 300 ml Druckreaktor ausgestattet mit einem Gaseintragsrührer wurde eine Mischung aus DMC-Katalysator (22,5 mg), Maleinsäureanhydrid (0,45 g) und cyclischem Propylencarbonat (30 g) vorgelegt und 30 min bei 110°C in einem partiellen Vakuum (50 mbar) unter Durchleiten von Argon durch die Reaktionsmischung gerührt (800 rpm).

Schritt β:

Die Suspension wurde dann auf 130 °C aufgeheizt und mit 15 bar $CO_2$ beaufschlagt, wobei ein leichter Temperaturabfall zu beobachten war. Nach Wiedererreichen einer Temperatur von 130°C wurden 3,0 g Propylenoxid mit Hilfe einer HPLC-Pumpe (1 ml/min) zudosiert. Die Reaktionsmischung wurde 20 min bei 130°C gerührt (800 rpm). Die Zugabe von 3,0 g Propylenoxid wurde ein zweites und drittes Mal wiederholt.

Schritt γ:

Die Temperatur wurde auf 110°C nachgeregelt und während der nachfolgenden Schritte der Druck im Druckreaktor durch Nachdosieren von $CO_2$ mit Hilfe eines Massenflußreglers bei 15 bar gehalten. Es wurden unter Rühren weitere 60,2 g Propylenoxid über eine HPLC-Pumpe (1 mL/min) zudosiert, wobei die Reaktionsmischung weiterhin gerührt wurde (800 U/min). Zehn Minuten nach Beginn der Zugabe von Propylenoxid wurde die Reaktion durch Kühlung des Reaktors mit Eiswasser gestoppt, da keine Reaktion beobachtet wurde.

**Beispiel 5 (Vergleich): Herstellung von Polyethercarbonatpolyol ohne Zugabe von Maleinsäureanhydrid**

In einem 300 ml Druckreaktor ausgestattet mit einem Gaseintragsrührer wurde eine Mischung aus DMC-Katalysator (22,5 mg) und cyclischem Propylencarbonat (30 g) vorgelegt und 30 min bei 110°C in einem partiellen Vakuum (50 mbar) unter Durchleiten von Argon durch die Reaktionsmischung gerührt (800 rpm).

Schritt β:

Die Suspension wurde dann auf 130 °C aufgeheizt und mit 15 bar $CO_2$ beaufschlagt, wobei ein leichter Temperaturabfall zu beobachten war. Nach Wiedererreichen einer Temperatur von 130°C wurden 3,0 g Propylenoxid mit Hilfe einer HPLC-Pumpe (1 ml/min) zudosiert. Die Reaktionsmischung wurde 20 min bei 130°C gerührt (800 rpm). Die Zugabe von 3,0 g Propylenoxid wurde ein zweites und drittes Mal wiederholt.

Schritt γ:

Die Temperatur wurde auf 110°C nachgeregelt und während der nachfolgenden Schritte der Druck im Druckreaktor durch Nachdosieren von $CO_2$ mit Hilfe eines Massenflußreglers bei 15 bar gehalten. Es wurden unter Rühren weitere 60,2 g Propylenoxid über eine HPLC-Pumpe (1 mL/min) zudosiert, wobei die Reaktionsmischung weiterhin gerührt wurde (800 U/min). Zehn Minuten nach Beginn der Zugabe von Propylenoxid wurden unter Rühren 2,4 g Dipropylenglycol über eine separate HPLC-Pumpe (0,05 mL/min) zudosiert. Nach Ende der Zugabe von Propylenoxid wurde die Reaktionsmischung noch weitere 30 min bei 110°C gerührt. Durch Abkühlen des Druckreaktors im Eisbad wurde die Reaktion beendet, der Überdruck abgelassen und das resultierende Produkt analysiert. Der im Polyetherestercarbonatpolyol eingebaute $CO_2$-Anteil, das Verhältnis an Carbonat- zu Ethereinheiten, das erhaltene Molekulargewicht, der Polydispersionsindex (PDI) und die OH-Zahl sind in Tabelle 1 angegeben.

**Tabelle 1:** Übersicht der Resultate der Herstellung von Polyetherestercarbonatpolyol unter Variation des Zugabezeitpunktes für das cyclische Anhydrid

| Beispiel | Zugabezeitpunkt | | | $CO_2$-Einbau | e/f | $M_n$ | PDI | OH-Zahl |
|---|---|---|---|---|---|---|---|---|
| | Schritt α | Schritt β | Schritt γ | [Gew.-%] | [-] | [g/mol] | | [$mg_{KOH}$· $g^{-1}$] |
| **1** | ohne MA | mit MA | mit MA | 12,4 | 0,25 | 5939 | 1,7 | 28,8 |
| **2** | ohne MA | ohne MA | mit MA | 12,0 | 0,23 | 5429 | 2,0 | 28,8 |
| **3 (Vgl.)** | ohne MA | mit MA | ohne MA | 10,7 | 0,19 | 5905 | 1,9 | 29,9 |
| **4 (Vgl.)** | mit MA | ohne MA | ohne MA | Es wurde kein Produkt erhalten. | | | | |
| **5 (Vgl.)** | ohne MA | ohne MA | ohne MA | 10,4 | 0,18 | 6943 | 2,4 | 26,2 |
| Vgl.: Vergleichsbeispiel | | | | | | | | |

Beispiele 1-2 und Vergleichsbeispiele 3-4 belegen, dass im Falle einer Zugabe von cyclischen Anhydriden in der Polymerisationsstufe (Schritt γ) (Beispiel 1) und gegebenenfalls ebenfalls in der zweiten Aktivierungsstufe (Schritt β) (Beispiel 2) der Anteil des in das Polymer eingebauten Kohlendioxids erhöht wird, während im Vergleich bei einer Zugabe von cyclischem Anhydrid nur während der zweiten Aktivierungsstufe (Schritt β) (Vergleichsbeispiel 3) oder der ersten Aktivierungsstufe (Schritt α) (Vergleichsbeispiel 4) ein geringerer Anteil an in das Polymer eingebautem Kohlendioxid erhalten wird. Ebenfalls erhöht sich der Anteil des in das Polymer eingebauten Kohlendioxids im Vergleich zur entsprechenden Copolymerisation von Alkylenoxid und Kohlendioxid in Abwesenheit eines cyclischen Carbonats (Vergleichsbeispiel 5).

**Beispiel 6: Herstellung eines Polyetherestercarbonatpolyols unter Zugabe von Maleinsäureanhydrid (10 Gew.-% Maleinsäureanhydrid gelöst in Propylenoxid) in Schritt β und γ**

Schritt α:

In einem 300 ml Druckreaktor ausgestattet mit einem Gaseintragsrührer wurde eine Mischung aus DMC-Katalysator (22,5 mg) und cyclischem Propylencarbonat (30 g) vorgelegt und 30 min bei 110°C in einem partiellen Vakuum (50 mbar) unter Durchleiten von Argon durch die Reaktionsmischung gerührt (800 rpm).

Schritt β:

Die Suspension wurde dann auf 130 °C aufgeheizt und mit 15 bar $CO_2$ beaufschlagt, wobei ein leichter Temperaturabfall zu beobachten war. Nach Wiedererreichen einer Temperatur von 130°C wurden 3,0 g einer Monomermischung (10 Gew.-% Maleinsäureanhydrid gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 3,0 g der Monomermischung wurde ein zweites und drittes Mal wiederholt.

Schritt γ:

Die Temperatur wurde auf 110°C nachgeregelt und während der nachfolgenden Schritte der Druck im Druckreaktor durch Nachdosieren von $CO_2$ mit Hilfe eines Massenflußreglers bei 15 bar gehalten. Es wurden unter Rühren

weitere 60,2 g einer Monomermischung (10 Gew.-% Maleinsäureanhydrid gelöst in Propylenoxid) über eine HPLC-Pumpe (1 mL/min) zudosiert, wobei die Reaktionsmischung weiterhin gerührt wurde (800 U/min). Zehn Minuten nach Beginn der Zugabe von der Monomermischung wurden unter Rühren 2,4 g Dipropylenglycol über eine separate HPLC-Pumpe (0,05 mL/min) zudosiert. Nach Ende der Zugabe von Propylenoxid wurde die Reaktionsmischung noch weitere 30 min bei 110°C gerührt. Durch Abkühlen des Druckreaktors im Eisbad wurde die Reaktion beendet, der Überdruck abgelassen und das resultierende Produkt analysiert. Der im Polyetherestercarbonatpolyol eingebaute $CO_2$-Anteil, das Verhältnis an Carbonat- zu Ethereinheiten, das erhaltene Molekulargewicht, der Polydispersionsindex (PDI) und die OH-Zahl sind in Tabelle 2 angegeben.

**Beispiel 7: Herstellung eines Polyetherestercarbonatpolyols unter Zugabe von Maleinsäureanhydrid (20 Gew.-% Maleinsäureanhydrid gelöst in Propylenoxid) in Schritt β und γ**

Schritt α:

In einem 300 ml Druckreaktor ausgestattet mit einem Gaseintragsrührer wurde eine Mischung aus DMC-Katalysator (22,5 mg) und cyclischem Propylencarbonat (30 g) vorgelegt und 30 min bei 110°C in einem partiellen Vakuum (50 mbar) unter Durchleiten von Argon durch die Reaktionsmischung gerührt (800 rpm).

Schritt β:

Die Suspension wurde dann auf 130 °C aufgeheizt und mit 15 bar $CO_2$ beaufschlagt, wobei ein leichter Temperaturabfall zu beobachten war. Nach Wiedererreichen einer Temperatur von 130°C wurden 3,0 g einer Monomermischung (10 Gew.-% Maleinsäureanhydrid gelöst in Propylenoxid) mit Hilfe einer HPLC-Pumpe (1 ml/min) zudosiert. Die Reaktionsmischung wurde 20 min bei 130°C gerührt (800 rpm). Die Zugabe von 3,0 g der Monomermischung wurde ein zweites und drittes Mal wiederholt.

Schritt γ:

Die Temperatur wurde auf 110°C nachgeregelt und während der nachfolgenden Schritte der Druck im Druckreaktor durch Nachdosieren von $CO_2$ mit Hilfe eines Massenflußreglers bei 15 bar gehalten. Es wurden unter Rühren weitere 60,2 g einer Monomermischung (10 Gew.-% Maleinsäureanhydrid gelöst in Propylenoxid) über eine HPLC-Pumpe (1 mL/min) zudosiert, wobei die Reaktionsmischung weiterhin gerührt wurde (800 U/min). Zehn Minuten nach Beginn der Zugabe von der Monomermischung wurden unter Rühren 2,4 g Dipropylenglycol über eine separate HPLC-Pumpe (0,05 mL/min) zudosiert. Nach Ende der Zugabe von Propylenoxid wurde die Reaktionsmischung noch weitere 30 min bei 110°C gerührt. Durch Abkühlen des Druckreaktors im Eisbad wurde die Reaktion beendet, der Überdruck abgelassen und das resultierende Produkt analysiert. Der im Polyetherestercarbonatpolyol eingebaute $CO_2$-Anteil, das Verhältnis an Carbonat- zu Ethereinheiten, das erhaltene Molekulargewicht, der Polydispersionsindex (PDI) und die OH-Zahl sind in Tabelle 2 angegeben.

**Tabelle 2:** Übersicht der Resultate der Herstellung von Polyetherestercarbonatpolyol unter Variation der Menge des zugegebenen cyclischen Anhydrids

| Beispiel | [MA]* | $CO_2$-Einbau | e/f | $M_n$ | PDI | OH-Zahl |
|---|---|---|---|---|---|---|
| | [Gew.-%] | [Gew.-%] | [-] | [g/mol] | | $[mg_{KOH} \cdot g^{-1}]$ |
| **1** | 5 | 12,5 | 0,25 | 5939 | 1,7 | 28,8 |
| **6** | 10 | 13,6 | 0,30 | 6810 | 2,1 | 27,8 |
| **7** | 20 | 17,4 | 0,56 | 6890 | 1,1 | 28,2 |
| **5 (Vgl.)** | 0 | 10,7 | 0,19 | 6943 | 2,4 | 26,2 |
| Vgl.: Vergleichsbeispiel; * [MA] ist der Anteil von gelöstem MA in PO | | | | | | |

Beispiele 1, 6 und 7 belegen, dass eine größere Menge an Anhydrid zu einem verstärkten Einbau von Kohlendioxid (höheres Verhältnis e/f) in das erhaltene Polyetherestercarbonatpolyol führt. Ebenfalls erhöht sich der Anteil des in das Polymer eingebauten Kohlendioxids im Vergleich zur entsprechenden Copolymerisation von Alkylenoxid und Kohlendioxid in Abwesenheit eines cyclischen Carbonats (Vergleichsbeispiel 5).

## Patentansprüche

1. Verfahren zur Herstellung von Polyetherestercarbonatpolyolen durch Anlagerung wenigstens eines Alkylenoxids, wenigstens eines cyclischen Anhydrids sowie Kohlendioxid an eine oder mehrere H-funktionelle Startersubstanzen in Gegenwart eines Doppelmetallcyanid-Katalysators,
**dadurch gekennzeichnet, dass**

   (α) ein Suspensionsmittel, das keine H-funktionellen Gruppen enthält, in einem Reaktor vorgelegt wird und
   (γ) eine oder mehrere H-funktionelle Startersubstanzen während der Reaktion kontinuierlich in den Reaktor zudosiert werden und die Dosierung eines oder mehrerer Alkylenoxide, des cyclischen Anhydrids und gegebenenfalls des Kohlendioxids simultan oder sequentiell erfolgen.

2. Verfahren nach Anspruch 1, **dadurch gekennzeichnet, dass** beim Vorlegen des Suspensionsmittels keine H-funktionelle Startersubstanz im Reaktor vorgelegt wird oder eine Teilmenge der H-funktionellen Startersubstanz im Reaktor vorgelegt wird.

3. Verfahren nach Anspruch 1 oder 2, **dadurch gekennzeichnet, dass** in Schritt (α) das Suspensionsmittel gemeinsam mit dem Doppelmetallcyanid-Katalysator vorgelegt wird.

4. Verfahren nach Anspruch 3, **dadurch gekennzeichnet, dass** anschließend an den Schritt (α)

   (β) zu dem Gemisch aus Schritt (α) eine Teilmenge an Alkylenoxid bei Temperaturen von 90 bis 150°C zugegeben und danach die Zugabe der Alkylenoxidverbindung und/oder des cyclischen Anhydrids unterbrochen wird, wobei der Schritt (β) insbesondere unter einer Inertgasatmosphäre, unter einer Atmosphäre eines Inertgas-Kohlendioxid-Gemisches oder unter einer Kohlendioxid-Atmosphäre durchgeführt wird.

5. Verfahren nach Anspruch 4, **dadurch gekennzeichnet, dass** im Schritt (β) (β1

   ) in einer ersten Aktivierungsstufe die Zugabe einer ersten Teilmenge von Alkylenoxid unter Inertgasatmosphäre erfolgt und
   (β2) in einer zweiten Aktivierungsstufe die Zugabe einer zweiten Teilmenge von Alkylenoxid unter Kohlendioxid-Atmosphäre erfolgt.

6. Verfahren nach einem der vorstehenden Ansprüche, **dadurch gekennzeichnet, dass** im Schritt

   (γ) die H-funktionelle Startersubstanz, das Alkylenoxid und das cyclische Anhydrid in Gegenwart von Kohlendioxid kontinuierlich in den Reaktor zudosiert werden.

7. Verfahren nach einem der vorstehenden Ansprüche, **dadurch gekennzeichnet, dass** im Schritt

   (γ) die Dosierung der H-funktionellen Startersubstanzen zeitlich vor der Zugabe des Alkylenoxids und/oder des cyclischen Anhydrids beendet wird.

8. Verfahren nach einem der vorstehenden Ansprüche, **dadurch gekennzeichnet, dass** im Schritt

   (γ) der Doppelmetallcyanid-Katalysator kontinuierlich in den Reaktor dosiert und das resultierende Reaktionsgemisch kontinuierlich aus dem Reaktor entfernt wird, wobei der Doppelmetallcyanid-Katalysator insbesondere in der H-funktionellen Starterverbindung suspendiert kontinuierlich zugegeben wird.

9. Verfahren nach Anspruch 8, **dadurch gekennzeichnet, dass** in einem dem Schritt (γ) nachgelagerten Schritt (δ) das in Schritt (γ) kontinuierlich entfernte Reaktionsgemisch mit einem Alkylenoxid-Gehalt von 0,05 bis 10 Gew.-% in einen Nachreaktor überführt und darin einer Nachreaktion unterzogen wird, wodurch der Gehalt an freiem Alkylenoxid auf weniger als 0,05 Gew.-% im Reaktionsgemisch reduziert wird.

10. Verfahren nach einem der vorstehenden Ansprüche, **dadurch gekennzeichnet, dass** das Suspensionsmittel ausgewählt ist aus der Gruppe umfassend oder bestehend aus 4-Methyl-2-oxo-1,3-dioxolan, 1,3-Dioxolan-2-on, Toluol, Xylol, Ethylbenzol, Chlorbenzol, Dichlorbenzol, sowie Mischungen von diesen.

11. Verfahren nach einem der vorstehenden Ansprüche, **dadurch gekennzeichnet, dass** das Suspensionsmittel ausgewählt ist aus der Gruppe umfassend oder bestehend aus aliphatischen Lactonen, aromatischen Lactonen, Lactiden, cyclischen Carbonaten mit mindestens drei gegebenenfalls substituierten Methylengruppen zwischen den Sauerstoffatomen der Carbonatgruppe.

12. Verfahren nach einem der vorstehenden Ansprüche, **dadurch gekennzeichnet, dass** als cyclisches Anhydrid mindestens eine Verbindung der Formel (II), (III) oder (IV) eingesetzt wird,

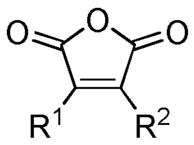
(II)

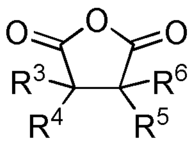
(III)

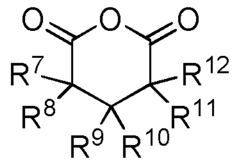
(IV)

wobei

R1 und R2 für Wasserstoff, Halogen, C1-C22-Alkyl, C1-C22-Alkenyl oder C6-C18-Aryl stehen oder R1 und R2 Glieder eines 4 bis 7 gliedrigen Rings oder polycyclischen Systems sind,
R3, R4, R5 und R6 für Wasserstoff, C1-C22-Alkyl, C1-C22-Alkenyl oder C6-C18-Aryl stehen oder Glieder eines 4 bis 7 gliedrigen Rings oder polycyclischen Systems sind und R7, R8, R9, R10, R11 und R12 für Wasserstoff, C1-C22-Alkyl, C1-C22-Alkenyl oder C6-C18-Aryl stehen oder Glieder eines 4 bis 7 gliedrigen Rings oder polycyclischen Systems sind, wobei das cyclische Anhydrid insbesondere ausgewählt ist aus der Gruppe bestehend aus Succinsäureanhydrid, Maleinsäureanhydrid, Phthalsäureanhydrid sowie Mischungen von diesen.

13. Verfahren nach einem der vorstehenden Ansprüche, **dadurch gekennzeichnet, dass** die H-funktionelle Startersubstanz ausgewählt ist aus der Gruppe umfassend oder bestehend aus Alkoholen, Aminen, Thiolen, Aminoalkoholen, Thioalkoholen, Hydroxyestern, Polyetherpolyolen, Polyesterpolyolen, Polyesteretherpolyolen, Polycarbonatpolyolen, Polyethercarbonatpolyolen, Polyethyleniminen, Polyetheraminen, Polytetrahydrofuranen, Polyetherthiolen, Polyacrylatpolyolen, Ricinusöl, dem Mono- oder Diglycerid der Ricinolsäure, Monoglyceriden von Fettsäuren, chemisch modifizierten Mono-, Di- und/oder Triglyceriden von Fettsäuren und C1-C24 Alkyl-Fettsäureestern, die im Mittel mindestens 2 OH-Gruppen pro Molekül enthalten.

14. Verfahren nach einem der vorstehenden Ansprüche, **dadurch gekennzeichnet, dass** die H-funktionelle Startersubstanz ausgewählt ist aus der Gruppe umfassend oder bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, 1,8-Octandiol, Diethylenglykol, Dipropylenglykol, Glycerin, Trimethylolpropan, di- und trifunktionellen Polyetherpolyolen oder Mischungen von diesen, wobei das Polyetherpolyol aus einer di-oder tri-H-funktionellen Startersubstanz und Propylenoxid oder einer di- oder tri-H-funktionellen Startersubstanz, Propylenoxid und Ethylenoxid aufgebaut ist und das Polyetherpolyol insbesondere ein Molekulargewicht $M_n$ im Bereich von 62 bis 4500 g/mol und eine Funktionalität von 2 bis 3 aufweist.

15. Verfahren nach einem der vorstehenden Ansprüche, **dadurch gekennzeichnet, dass**

(γ) die Dosierung der einen oder mehreren H-funktionellen Startersubstanzen, des wenigstens einen Alkylenoxids, des wenigstens einen cyclischen Anhydrids und des Kohlendioxids während der Reaktion in den Reaktor simultan und kontinuierlich erfolgt.

## Claims

1. Process for preparing polyether ester carbonate polyols by adding at least one alkylene oxide, at least one cyclic anhydride and carbon dioxide onto one or more H-functional starter substances in the presence of a double metal cyanide catalyst,
**characterized in that**

(α) a suspension medium containing no H-functional groups is initially charged in a reactor and

(γ) one or more H-functional starter substances is metered continuously into the reactor during the reaction and the metered addition of one or more alkylene oxides, the cyclic anhydride and optionally the carbon dioxide is effected simultaneously or sequentially.

2. Process according to Claim 1, **characterized in that**, when the suspension medium is initially charged, no H-functional starter substance is initially charged in the reactor or a portion of the H-functional starter substance is initially charged in the reactor.

3. Process according to Claim 1 or 2, **characterized in that**, in step (α), the suspension medium is initially charged together with the double metal cyanide catalyst.

4. Process according to Claim 3, **characterized in that**, after step (α),

   (β) a portion of alkylene oxide is added to the mixture from step (α) at temperatures of 90 to 150°C and then the addition of the alkylene oxide compound and/or the cyclic anhydride is stopped, step (β) especially being conducted under an inert gas atmosphere, under an atmosphere of an inert gas-carbon dioxide mixture or under a carbon dioxide atmosphere.

5. Process according to Claim 4, **characterized in that**, in step (β),

   (β1) in a first activation stage a first portion of alkylene oxide is added under inert gas atmosphere and
   (β2) in a second activation stage a second portion of alkylene oxide is added under carbon dioxide atmosphere.

6. Process according to any of the preceding claims, **characterized in that**, in step (γ), the H-functional starter substance, the alkylene oxide and the cyclic anhydride are metered continuously into the reactor in the presence of carbon dioxide.

7. Process according to any of the preceding claims, **characterized in that**, in step (γ), the metered addition of the H-functional starter substances is ended prior to the addition of the alkylene oxide and/or the cyclic anhydride.

8. Process according to any of the preceding claims, **characterized in that**, in step (γ), the double metal cyanide catalyst is metered continuously into the reactor and the resulting reaction mixture is removed continuously from the reactor, the double metal cyanide catalyst especially being added continuously in suspension in the H-functional starter compound.

9. Process according to Claim 8, **characterized in that**, in a step (δ) downstream of step (γ), the reaction mixture removed continuously in step (γ) with an alkylene oxide content of 0.05% to 10% by weight is transferred into a postreactor and subjected to a postreaction therein, which reduces the content of free alkylene oxide to less than 0.05% by weight in the reaction mixture.

10. Process according to any of the preceding claims, **characterized in that** the suspension medium is selected from the group comprising or consisting of 4-methyl-2-oxo-1,3-dioxolane, 1,3-dioxolan-2-one, toluene, xylene, ethylbenzene, chlorobenzene, dichlorobenzene and mixtures of these.

11. Process according to any of the preceding claims, **characterized in that** the suspension medium is selected from the group comprising or consisting of aliphatic lactones, aromatic lactones, lactides, cyclic carbonates having at least three optionally substituted methylene groups between the oxygen atoms of the carbonate group.

12. Process according to any of the preceding claims, **characterized in that** the cyclic anhydride used is at least one compound of the formula (II), (III) or (IV)

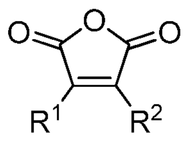

(II)

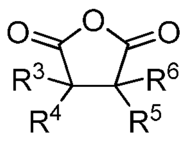

(III)

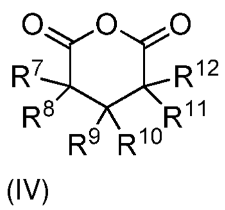

(IV)

where

R1 and R2 are hydrogen, halogen, C1-C22-alkyl, C1-C22-alkenyl or C6-C18-aryl, or R1 and R2 are members of a 4- to 7-membered ring or polycyclic system,
R3, R4, R5 and R6 are hydrogen, C1-C22-alkyl, C1-C22-alkenyl or C6-C18-aryl or are members of a 4- to 7-membered ring or polycyclic system and
R7, R8, R9, R10, R11 and R12 are hydrogen, C1-C22-alkyl, C1-C22-alkenyl or C6-C18-aryl or are members of a 4- to 7-membered ring or polycyclic system, where the cyclic anhydride is especially selected from the group consisting of succinic anhydride, maleic anhydride, phthalic anhydride and mixtures of these.

**13.** Process according to any of the preceding claims, **characterized in that** the H-functional starter substance is selected from the group comprising or consisting of alcohols, amines, thiols, amino alcohols, thio alcohols, hydroxy esters, polyether polyols, polyester polyols, polyester ether polyols, polycarbonate polyols, polyether carbonate polyols, polyethyleneimines, polyetheramines, polytetrahydrofurans, polyether thiols, polyacrylate polyols, castor oil, the mono- or diglyceride of castor oil, monoglycerides of fatty acids, chemically modified mono-, di- and/or triglycerides of fatty acids and C1-C24-alkyl fatty acid esters containing an average of at least 2 OH groups per molecule.

**14.** Process according to any of the preceding claims, **characterized in that** the H-functional starter substance is selected from the group comprising or consisting of ethylene glycol, propylene glycol, 1,3-propanediol, 1,3-butanediol, 1,4-butanediol, 1,5-pentanediol, 2-methylpropane-1,3-diol, neopentyl glycol, 1,6-hexanediol, 1,8-octanediol, diethylene glycol, dipropylene glycol, glycerol, trimethylolpropane, di- and trifunctional polyether polyols and mixtures of these, where the polyether polyol has been formed from a di- or tri-H-functional starter substance and propylene oxide or a di- or tri-H-functional starter substance, propylene oxide and ethylene oxide and the polyether polyol especially has a molecular weight $M_n$ in the range from 62 to 4500 g/mol and a functionality of 2 to 3.

**15.** Process according to any of the preceding claims, **characterized in that**

(γ) the metered addition of the one or more H-functional starter substances, the at least one alkylene oxide, the at least one cyclic anhydride and the carbon dioxide into the reactor is effected simultaneously and continuously during the reaction.

## Revendications

**1.** Procédé de fabrication de polyéther-ester-carbonate-polyols par addition d'au moins un oxyde d'alkylène, d'au moins un anhydride cyclique et de dioxyde de carbone sur une ou plusieurs substances de départ à fonction H en présence d'un catalyseur de cyanure de métal double,
**caractérisé en ce que**

(α) un agent de suspension qui ne contient pas de groupes à fonction H est chargé dans un réacteur et
(γ) une ou plusieurs substances de départ à fonction H sont ajoutées dans le réacteur en continu pendant la réaction et l'ajout d'un ou de plusieurs oxydes d'alkylène, de l'anhydride cyclique et éventuellement du dioxyde de carbone a lieu simultanément ou séquentiellement.

**2.** Procédé selon la revendication 1, **caractérisé en ce que**, lors du chargement de l'agent de suspension, aucune substance de départ à fonction H n'est chargée dans le réacteur ou une partie de la substance de départ à fonction H est chargée dans le réacteur.

**3.** Procédé selon la revendication 1 ou 2, **caractérisé en ce qu'**à l'étape (α), l'agent de suspension est chargé conjointement avec le catalyseur de cyanure de métal double.

**4.** Procédé selon la revendication 3, **caractérisé en ce qu'**après l'étape (α),

(β) une partie de l'oxyde d'alkylène est ajoutée au mélange de l'étape (α) à des températures de 90 à 150 °C, puis l'ajout du composé d'oxyde d'alkylène et/ou de l'anhydride cyclique est interrompu, l'étape (β) étant notamment réalisée dans une atmosphère de gaz inerte, dans une atmosphère d'un mélange de gaz inerte-dioxyde de carbone ou dans une atmosphère de dioxyde de carbone.

**5.** Procédé selon la revendication 4, **caractérisé en ce qu'**à l'étape (β),

(β1) lors d'une première étape d'activation, l'ajout d'une première partie de l'oxyde d'alkylène a lieu dans une atmosphère de gaz inerte, et

(β2) lors d'une deuxième étape d'activation, l'ajout d'une deuxième partie de l'oxyde d'alkylène a lieu dans une atmosphère de dioxyde de carbone.

**6.** Procédé selon l'une quelconque des revendications précédentes, **caractérisé en ce qu'**à l'étape (γ), la substance de départ à fonction H, l'oxyde d'alkylène et l'anhydride cyclique sont ajoutés en continu dans le réacteur en présence de dioxyde de carbone.

**7.** Procédé selon l'une quelconque des revendications précédentes, **caractérisé en ce qu'**à l'étape (γ), l'ajout de la substance de départ à fonction H est terminé dans le temps avant l'ajout de l'oxyde d'alkylène et/ou de l'anhydride cyclique.

**8.** Procédé selon l'une quelconque des revendications précédentes, **caractérisé en ce qu'**à l'étape (γ), le catalyseur de cyanure de métal double est ajouté en continu dans le réacteur et le mélange réactionnel résultant est déchargé en continu du réacteur, le catalyseur de cyanure de métal double étant notamment ajouté en continu suspendu dans le composé de départ à fonction H.

**9.** Procédé selon la revendication 8, **caractérisé en ce que** lors d'une étape (δ) en aval de l'étape (γ), le mélange réactionnel déchargé en continu à l'étape (γ) ayant une teneur en oxyde d'alkylène de 0,05 à 10 % en poids est transféré dans un réacteur secondaire et y est soumis à une réaction secondaire, par laquelle la teneur en oxyde d'alkylène libre dans le mélange réactionnel est réduite à moins de 0,05 % en poids.

**10.** Procédé selon l'une quelconque des revendications précédentes, **caractérisé en ce que** l'agent de suspension est choisi dans le groupe comprenant ou constitué par le 4-méthyl-2-oxo-1,3-dioxolane, la 1,3-dioxolan-2-one, le toluène, le xylène, l'éthylbenzène, le chlorobenzène, le dichlorobenzène et les mélanges de ceux-ci.

**11.** Procédé selon l'une quelconque des revendications précédentes, **caractérisé en ce que** l'agent de suspension est choisi dans le groupe comprenant ou constitué par les lactones aliphatiques, les lactones aromatiques, les lactides, les carbonates cycliques contenant au moins trois groupes méthylène éventuellement substitués entre les atomes d'oxygène du groupe carbonate.

**12.** Procédé selon l'une quelconque des revendications précédentes, **caractérisé en ce qu'**au moins un composé de formule (II), (III) ou (IV) est utilisé en tant qu'anhydride cyclique :

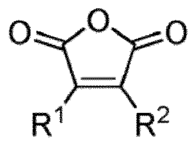
(II)

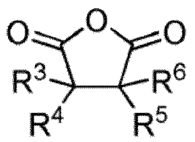
(III)

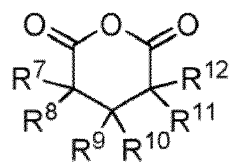
(IV)

dans lesquelles

R1 et R2 représentent hydrogène, halogène, alkyle en C1-C22, alcényle en C1-C22 ou aryle en C6-C18, ou R1 et R2 sont des chaînons d'un cycle de 4 à 7 chaînons ou d'un système polycyclique,

R3, R4, R5 et R6 représentent hydrogène, alkyle en C1-C22, alcényle en C1-C22 ou aryle en C6-C18, ou sont des chaînons d'un cycle de 4 à 7 chaînons ou d'un système polycyclique, et

R7, R8, R9, R10, R11 et R12 représentent hydrogène, alkyle en C1-C22, alcényle en C1-C22 ou aryle en C6-C18, ou sont des chaînons d'un cycle de 4 à 7 chaînons ou d'un système polycyclique, l'anhydride cyclique étant notamment choisi dans le groupe constitué par l'anhydride de l'acide succinique, l'anhydride de l'acide maléique, l'anhydride de l'acide phtalique et les mélanges de ceux-ci.

**13.** Procédé selon l'une quelconque des revendications précédentes, **caractérisé en ce que** la substance de départ à fonction H est choisie dans le groupe comprenant ou constitué par les alcools, les amines, les thiols, les aminoalcools, les thioalcools, les hydroxyesters, les polyéther-polyols, les polyester-polyols, les polyester-éther-polyols, les polycarbonate-polyols, les polyéther-carbonate-polyols, les polyéthylène-imines, les polyéther-amines, les polytétrahydrofuranes, les polyéther-thiols, les polyacrylate-polyols, l'huile de ricin, le mono- ou diglycéride de l'acide ricinoléique, les monoglycérides d'acides gras, les mono-, di- et/ou triglycérides modifiés chimiquement d'acides gras et d'esters alkyliques en C1-C24 d'acides gras, qui contiennent en moyenne au moins 2 groupes OH par molécule.

**14.** Procédé selon l'une quelconque des revendications précédentes, **caractérisé en ce que** la substance de départ à fonction H est choisie dans le groupe comprenant ou constitué par l'éthylène glycol, le propylène glycol, le 1,3-propanediol, le 1,3-butanediol, le 1,4-butanediol, le 1,5-pentanediol, le 2-méthylpropane-1,3-diol, le néopentylglycol, le 1,6-hexanediol, le 1,8-octanediol, le diéthylène glycol, le dipropylène glycol, la glycérine, le triméthylolpropane, les polyéther-polyols di- et trifonctionnels ou les mélanges de ceux-ci, le polyéther-polyol étant formé à partir d'une substance de départ à deux ou trois fonctions H et d'oxyde de propylène ou d'une substance de départ à deux ou trois fonctions H, d'oxyde de propylène et d'oxyde d'éthylène, et le polyéther-polyol présentant notamment un poids moléculaire $M_n$ dans la plage allant de 62 à 4 500 g/mol et une fonctionnalité de 2 à 3.

**15.** Procédé selon l'une quelconque des revendications précédentes, **caractérisé en ce que**

(γ) l'ajout de la ou des substances de départ à fonction H, dudit au moins un oxyde d'alkylène, dudit au moins un anhydride cyclique et du dioxyde de carbone pendant la réaction dans le réacteur a lieu simultanément et en continu.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- WO 20013087582 A2
- EP 11194164 A
- EP 0222453 A
- WO 2003029325 A
- WO 2008092767 A
- EP 2703425 A1
- EP 2604641 A
- EP 2604642 A
- EP 1359177 A
- US 3404109 A
- US 3829505 A
- US 3941849 A
- US 5158922 A
- US 5470813 A
- EP 700949 A
- EP 743093 A
- EP 761708 A
- WO 9740086 A
- WO 9816310 A
- WO 0047649 A
- JP 4145123 B
- WO 0139883 A
- WO 0180994 A
- WO 0180994 A1


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220